# EUROPEAN PATENT APPLICATION

(11) **EP 4 480 648 A1**
(43) Date of publication of application: **25.12.2024**
(21) Application number: 24182796.3
(22) Date of filing: 18.06.2024
(51) Int. Cl.: B25J 9/16, B25J 15/06, B25J 5/00, B25J 13/08, B25J 15/00

(54) **ROBOT CONTROL SYSTEM, ROBOT CONTROL METHOD, AND PROGRAM**

(30) Priority: 23.06.2023 JP 2023103529
(71) Applicant: Kabushiki Kaisha Yaskawa Denki, Kitakyushu-shi, Fukuoka 806-0004 (JP)
(72) Inventor: Miyauchi, Kohei, Kitakyushu-shi, Fukuoka, 806-0004 (JP); Suyama, Takashi, Kitakyushu-shi, Fukuoka, 806-0004 (JP); Ideguchi, Hisashi, Kitakyushu-shi, Fukuoka, 806-0004 (JP); Tachikake, Hiroki, Kitakyushu-shi, Fukuoka, 806-0004 (JP)
(74) Representative: Grünecker Patent- und Rechtsanwälte PartG mbB

(57) **Abstract**

To support an indefinite-shape object in a state of being placed at a predetermined location under a stable state to convey the indefinite-shape object, a robot control system (1) includes a first robot (30) and a second robot (40). A first robot control module (101) controls the first robot (30) so that the first robot (30) supports a first part of an indefinite-shape object (OB) placed at a predetermined location. A second robot control module (201) controls the second robot (40) so that the second robot (40) supports a second part of the indefinite-shape object to convey the indefinite-shape object (OB) in cooperation with the first robot (30) , the second part being different from the first part.

## Description

### BACKGROUND OF THE INVENTION

### Field of the Invention

The present disclosure relates to a robot control system, a robot control method, and a program.

### Description of the Related Art

For example, in Japanese Patent Application Laid-open No. 2011-062788, there is described a manipulator apparatus including a base portion, a plurality of tip arms which are coupled to the base portion and are capable of supporting an object at tips thereof, drive means for changing positions and postures of the tip arms with respect to the base portion, and control means for controlling the drive means so as to control a position and a posture of the object.

### SUMMARY OF THE INVENTION

An object of the present disclosure is to, for example, support an indefinite-shape object in a state of being placed at a predetermined location under a stable state to convey the indefinite-shape object.

According to at least one aspect of the present disclosure, there is provided a robot control system including: a first robot; a second robot; a first robot control module configured to control the first robot so that the first robot supports a first part of an indefinite-shape object placed at a predetermined location; and a second robot control module configured to control the second robot so that the second robot supports a second part of the indefinite-shape object to convey the indefinite-shape object in cooperation with the first robot, the second part being different from the first part.

According to the present disclosure, for example, it is possible to support the indefinite-shape object in the state of being placed at the predetermined location under the stable state to convey the indefinite-shape object.

### BRIEF DESCRIPTION OF THE DRAWINGS

FIG. 1 is a diagram for illustrating an example of a hardware configuration of a robot control system.
FIG. 2 is a view for illustrating an example of a space in which a first robot controller, a second robot controller, a first robot, and a second robot are arranged.
FIG. 3 is a view for illustrating an example of a photography position.
FIG. 4 is a view for illustrating an example of operations of the first robot and the second robot.
FIG. 5 is a view for illustrating an example of the operations of the first robot and the second robot.
FIG. 6 is a view for illustrating an example of the operations of the first robot and the second robot.
FIG. 7 is a diagram for illustrating an example of functions implemented in the robot control system.
FIG. 8 is a view for illustrating an example of movement paths of the first robot and the second robot.
FIG. 9 is a flowchart for illustrating an example of processing to be executed by the robot control system.
FIG. 10 is a diagram for illustrating an example of functions implemented in a robot control system according to modification examples.
FIG. 11 is a diagram for illustrating an example of a hardware configuration of a robot control system according to Modification Example 1.
FIG. 12 is a view for illustrating an example of a first supporting position and a second supporting position that correspond to the center of gravity.
FIG. 13 is a view for illustrating an example of a state in which each of a first attracting device and a second attracting device attracts an indefinite-shape object OB in an orientation corresponding to the indefinite-shape object.

### DESCRIPTION OF THE EMBODIMENTS

### [1. Hardware Configuration of Robot Control System]

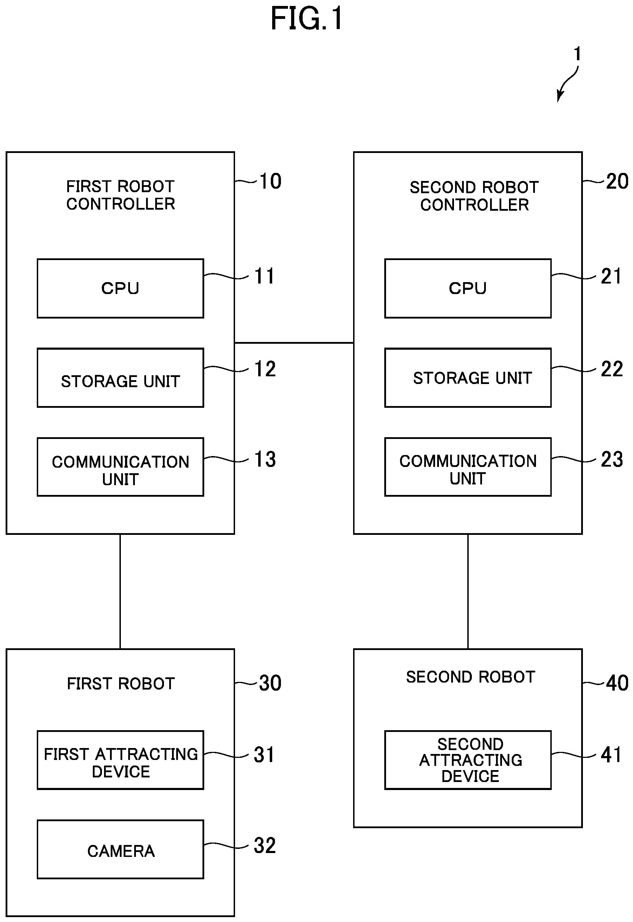

Description is given of an example of an embodiment of a robot control system, a robot control method, and a program according to the present disclosure. FIG. 1 is a diagram for illustrating an example of a hardware configuration of the robot control system. For example, a robot control system 1 includes a first robot controller 10, a second robot controller 20, a first robot 30, and a second robot 40.

The first robot controller 10 is a device for controlling the first robot 30. The first robot controller 10 is connected to the first robot 30 via a cable such as a power line or a signal line. The first robot controller 10 is connected to the second robot controller 20 so that communication is allowed therebetween via a network such as an industrial network or a LAN. For example, the first robot controller 10 includes a CPU 11, a storage unit 12, and a communication unit 13.

For example, the CPU 11 includes at least one processor. The storage unit 12 includes at least one of a volatile memory or a non-volatile memory. The communication unit 13 includes at least one of a communication interface for wired communication or a communication interface for wireless communication. The first robot controller 10 also includes other hardware such as a power supply unit for supplying electric power to at least one motor included in the first robot 30.

The second robot controller 20 is a device for controlling the second robot 40. The second robot controller 20 is connected to the second robot 40 via a cable such as a power line or a signal line. The second robot controller 20 is connected to the first robot controller 10 so that communication is allowed therebetween via a network such as an industrial network or a LAN. A master-servant relationship may be present between the first robot controller 10 and the second robot controller 20. For example, the first robot controller 10 may operate based on an instruction from the second robot controller 20. Conversely, the second robot controller 20 may operate based on an instruction from the first robot controller 10.

For example, the second robot controller 20 includes a CPU 21, a storage unit 22, and a communication unit 23. The hardware configurations of the CPU 21, the storage unit 22, and the communication unit 23 may be similar to those of the CPU 11, the storage unit 12, and the communication unit 13, respectively. The second robot controller 20 also includes other hardware such as a power supply unit for supplying electric power to at least one motor included in the second robot 40.

The first robot 30 is a device which includes at least one motor that is controlled by the first robot controller 10. In this embodiment, description is given of a case in which the first robot 30 is a vertically articulated robot, but the first robot 30 may be of any type and is not limited to a vertically articulated robot. For example, the first robot 30 may be a horizontally articulated robot, a parallel link robot, or a Cartesian robot. The first robot 30 may have any number of axes, for example, any of 4 axes to 7 axes.

For example, the first robot 30 includes at least one first attracting device 31. In this embodiment, as an example, description is given of a case in which the first attracting device 31 is a suction device, but the first attracting device 31 is only required to be a device capable of attracting an object, and is not limited to a suction device. For example, the first attracting device 31 may be a robot hand including a suction pad, a device for attracting an object by a magnetic force, or a device for attracting an object by an electrostatic force. The first robot 30 is not required to include the first attracting device 31, and may support the object by an end effector having no attraction function. For example, the first robot 30 may support the object by a robot hand or a plate having no attraction function.

For example, the first attracting device 31 is a suction device including a suction cup (sucker) to be brought into contact with an object, and a pump for suction. The first attracting device 31 creates, by the pump, a vacuum state between the suction cup and the object brought into contact with the suction cup. The first attracting device 31 may be a suction device of any type, and is not limited to a suction device including a suction cup. For example, the first attracting device 31 may be a mat-shaped suction device including no suction cup, or may be a suction device called a vacuum gripper.

For example, the first robot 30 includes at least one camera 32. The camera 32 may also be referred to as "vision sensor." In this embodiment, description is given of a case in which the camera 32 is a 3D camera, but the camera 32 may be of any type and is not limited to a 3D camera. For example, the camera 32 may be a 2D camera (a camera without a depth sensor) or an infrared camera. The camera 32 may generate moving images by continuously capturing images at a predetermined frame rate, or may generate still images without continuously capturing images.

The second robot 40 is a device which includes at least one motor that is controlled by the second robot controller 20. In this embodiment, description is given of a case in which the second robot 40 is a vertically articulated robot, but the second robot 40 may be of any type, similarly to the first robot 30. The number of axes of the second robot 40 may be any number of axes, similarly to the first robot 30. The second robot 40 is a robot that is physically independent of the first robot 30.

For example, the second robot 40 includes at least one second attracting device 41. The hardware configuration of the second attracting device 41 may be similar to that of the first attracting device 31. In this embodiment, as an example, description is given of a case in which both of the first attracting device 31 and the second attracting device 41 are suction devices, but the first attracting device 31 and the second attracting device 41 may be devices of types different from each other. For example, the first attracting device 31 may be a suction device, and the second attracting device 41 may be a robot hand having no suction function. For example, the first attracting device 31 may be a robot hand having no suction function, and the second attracting device 41 may be a suction device.

At least one of the first robot 30 or the second robot 40 may include an attracting device for attracting the indefinite-shape object (an amorphous object or a flexible object). The attracting device of this at least one robot may be a suction device for sucking the indefinite-shape object, or may be other attracting devices described above. For example, the first robot 30 may include the first attracting device 31, and the second robot 40 may include an end effector having no attraction function instead of including the second attracting device 41. The first robot 30 may include an end effector having no attraction function instead of including the first attracting device 31, and the second robot 40 may include the second attracting device 41. In the following, when the first attracting device 31 and the second attracting device 41 are not distinguished from each other, the first attracting device 31 and the second attracting device 41 are sometimes simply referred to as "attracting device."

The program or the data stored in the storage unit 12 may be supplied to the first robot controller 10 via a network such as an industrial network, the Internet, or a LAN. The program or the data stored in the storage unit 22 may be supplied to the second robot controller 20 via this network. For example, at least one of the first robot controller 10 or the second robot controller 20 may include at least one of a reading unit (for example, a memory card slot) for reading a computer-readable information storage medium or an input/output unit (for example, a USB terminal) for connecting to an external apparatus. The program or the data stored in the computer-readable information storage medium may be supplied to at least one of the first robot controller 10 or the second robot controller 20 via the reading unit or the input/output unit.

Further, various types of hardware are applicable to the first robot controller 10, the second robot controller 20, the first robot 30, and the second robot 40. The hardware configurations of the first robot controller 10, the second robot controller 20, the first robot 30, and the second robot 40 are not limited to the examples described above. For example, at least one of the first robot controller 10 or the second robot controller 20 may include a circuit such as an FPGA or an ASIC. In this embodiment, description is given of a case in which the CPU 11 or 21 corresponds to a configuration called "circuitry," but another circuit such as an FPGA or an ASIC may correspond to the circuitry.

Further, the device included in the robot control system 1 is not limited to the example of FIG. 1. The robot control system 1 may include any device. For example, the robot control system 1 may include a host controller for controlling the first robot controller 10 and the second robot controller 20. For example, the robot control system 1 may include a sensor such as a motor encoder, a torque sensor, a position sensor, an acceleration sensor, a gyroscope, a pressure-sensitive sensor, or a contact sensor. Those sensors may be connected to at least one of the first robot controller 10 or the second robot controller 20, or may be included in at least one of the first robot 30 or the second robot 40. The second robot 40 may include a camera similar to the camera 32.

Further, the first robot 30 and the second robot 40 may be controlled by one robot controller. For example, the first robot controller 10 may control the first robot 30 and the second robot 40. In this case, the robot control system 1 includes no second robot controller 20. Conversely, the second robot controller 20 may control the first robot 30 and the second robot 40. In this case, the robot control system 1 includes no first robot controller 10. The robot control system 1 may include at least one of another robot controller other than the first robot controller 10 and the second robot controller 20, or another robot other than the first robot 30 and the second robot 40.

### [2. Outline of Robot Control System]

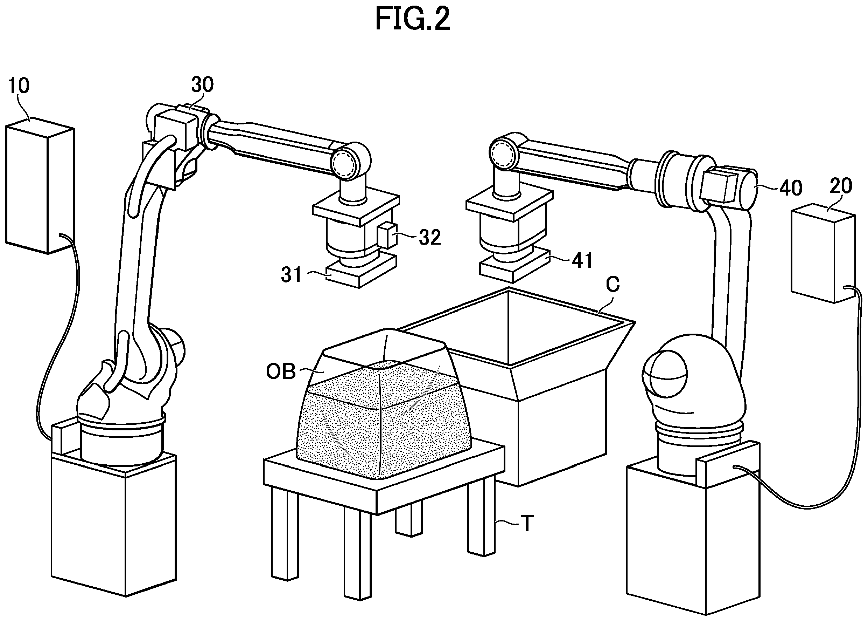

FIG. 2 is a view for illustrating an example of a space in which the first robot controller 10, the second robot controller 20, the first robot 30, and the second robot 40 are arranged. For example, the first robot controller 10, the second robot controller 20, the first robot 30, and the second robot 40 are arranged in a facility such as a factory. In this embodiment, the first robot 30 and the second robot 40 sandwich and support an indefinite-shape object OB placed on a work table T.

The indefinite-shape object OB is an object whose shape is indefinite. The indefinite-shape object OB can also be referred to as "flexible object." The shape of the indefinite-shape object OB easily changes. When a certain magnitude of force is applied to the indefinite-shape object OB, the shape of the indefinite-shape object OB changes. For example, the indefinite-shape object OB is an object put into a bag or an object covered with a buffer material. The bag or the buffer material is also a part of the indefinite-shape object OB. The indefinite-shape object OB may be placed at any location other than the work table T. For example, the indefinite-shape object OB may be placed on a floor, a ground, a conveying robot, a shelf, a packaging material, or at other locations.

In this embodiment, description is given of a case in which a poly bag having contents packed therein corresponds to the indefinite-shape object OB, but the indefinite-shape object OB may be any object, and is not limited to a poly bag. For example, the indefinite-shape object OB may be a polyvinyl bag, an aluminum-metallized bag, a paper bag, a jute bag, a flexible intermediate bulk container, an infusion bag, or other bags having contents packed therein. For example, the indefinite-shape object OB may have, as contents packed therein, a raw material or a material of a product to be produced in a factory.

For example, the indefinite-shape object OB is packed in a packaging material such as corrugated cardboard. The first robot controller 10 controls the first robot 30 so that the first robot 30 cuts the packaging material with a blade of a cutter. The second robot controller 20 controls the second robot 40 so that the second robot 40 fixes the packaging material. After the cutting of the packaging material is completed, at least a part of the packaging material is removed. It is assumed that the end effector of at least one of the first robot 30 or the second robot 40 is mountable and removable. The unpackaging of the packaging material may be performed by a worker instead of the first robot 30 and the second robot 40.

For example, the indefinite-shape object OB is placed on the work table T arranged between the first robot 30 and the second robot 40. When an opening portion of the indefinite-shape object OB is taped, for example, the opening portion of the indefinite-shape object OB may be opened by the first robot 30, the second robot 40, another robot, or a worker. In the example of FIG. 2, the indefinite-shape object OB is arranged on the work table T so that the opening portion thereof is directed upward. In the vicinity of the work table T, a storage container C for storing the contents of the indefinite-shape object OB is arranged.

For example, the first robot 30 and the second robot 40 sandwich and support the indefinite-shape object OB whose opening portion is opened, and convey the indefinite-shape object OB to a position above the storage container C. The first robot 30 and the second robot 40 rotate the indefinite-shape object OB so that the opening portion of the indefinite-shape object OB is directed downward, and drop the contents of the indefinite-shape object OB into the storage container C. The first robot controller 10 and the second robot controller 20 are synchronized with each other so as to control the first robot 30 and the second robot 40 performing those series of operations.

In this embodiment, the first robot controller 10 controls the first robot 30 so that the first robot 30 photographs the indefinite-shape object OB by using the camera 32 so as to identify the position of the indefinite-shape object OB and the overall shape of the indefinite-shape object OB. The indefinite-shape object OB is photographed by the camera 32 before the indefinite-shape object OB is conveyed by the first robot 30 and the second robot 40. In this embodiment, the indefinite-shape object OB is photographed from each of a plurality of photography positions determined in advance.

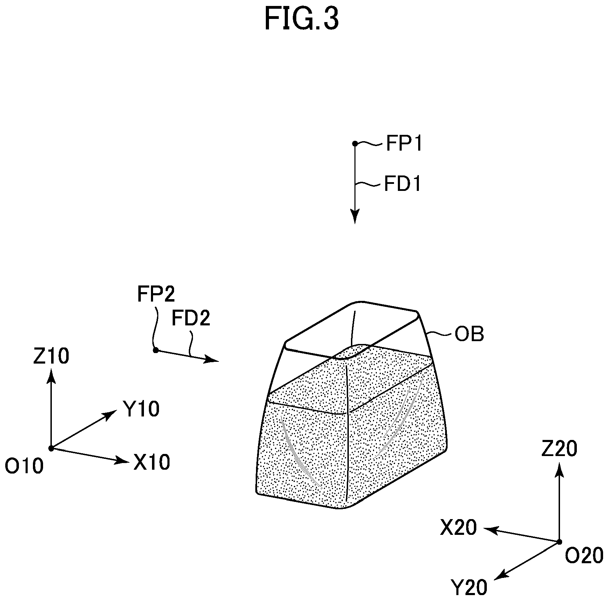

FIG. 3 is a view for illustrating an example of photography positions. For example, the first robot controller 10 identifies positions in real space by using a coordinate system in which an X10 axis, a Y10 axis, and a Z10 axis are set around an origin O10 corresponding to the base on which the first robot 30 is arranged. The coordinate system may be any coordinate system used in robot control, and is not limited to the example of FIG. 3. For example, a coordinate system may be set for each axis of the first robot 30.

In the example of FIG. 3, a photography position FP1 on an upper side of the indefinite-shape object OB and a photography position FP2 on a transverse side of the indefinite-shape object OB are determined in advance. At the photography position FP1, a photographing direction FD1 in the negative direction of the Z10 axis is determined. At the photography position FP2, a photographing direction FD2 in the positive direction of the X10 axis is determined. For example, the first robot controller 10 controls the first robot 30 so that the camera 32 photographs the indefinite-shape object OB from the photography position FP1 in the photographing direction FD1. Then, the first robot controller 10 controls the first robot 30 so that the camera 32 photographs the indefinite-shape object OB from the photography position FP2 in the photographing direction FD2.

The combinations of the photography position and the photographing direction are not limited to two combinations as illustrated in FIG. 3. There may be only one combination of the photography position and the photographing direction, or there may be three or more combinations of the photography position and the photographing direction. For example, the first robot controller 10 may control the first robot 30 so that the camera 32 evenly photographs the indefinite-shape object OB while moving around the indefinite-shape object OB. The combination of the photography position and the photographing direction is not required to be determined in advance. For example, the first robot controller 10 may determine the combination of the photography position and the photography direction at the time the photographed images are generated by the camera 32.

For example, the first robot controller 10 analyzes the photographed images generated by the camera 32 and identifies the position of the indefinite-shape object OB and the shape of the indefinite-shape object OB. Any method used in the image processing field can be used as the identification method. For example, the first robot controller 10 may identify the shape of the indefinite-shape object OB based on a machine learning method such as a neural network, or based on a pattern of feature points extracted from the photographed images. The first robot controller 10 determines a supporting position of the indefinite-shape object OB based on the position of the indefinite-shape object OB and the shape of the indefinite-shape object OB.

For example, the first robot controller 10 transmits, to the second robot controller 20, indefinite-shape object data indicating the position of the indefinite-shape object OB and the shape of the indefinite-shape object OB. The indefinite-shape object data is only required to be data having a format that can express a three-dimensional position of an object and a three-dimensional shape of the object. For example, the indefinite-shape object data may be data having a format adopted in software of 3D-CAD. The indefinite-shape object data may be data of a point cloud indicating the side face of the indefinite-shape object OB, or data indicating a contour line of the surface of the indefinite-shape object OB. The second robot controller 20 receives the indefinite-shape object data from the first robot controller 10.

For example, when the indefinite-shape object data is represented by a coordinate system using the first robot 30 as a reference, the second robot controller 20 converts the indefinite-shape object data into a coordinate system using the second robot 40 as a reference. In the example of FIG. 3, the second robot controller 20 converts the coordinates indicated by the indefinite-shape object data into a coordinate system in which an axis X20, an axis Y20, and an axis Z20 are set around an origin 020 corresponding to the base on which the second robot 40 is arranged. It is assumed that the second robot controller 20 identifies in advance a relative positional relationship between the first robot 30 and the second robot 40, and stores in advance information for performing coordinate conversion (for example, a matrix) in the storage unit 22. The conversion of the coordinate system may be executed by the first robot controller 10.

For example, the first robot controller 10 determines a first supporting position at which the first attracting device 31 supports the indefinite-shape object OB, based on the indefinite-shape object data. The first supporting position is a position at which the first attracting device 31 comes into contact with the indefinite-shape object OB. The first robot controller 10 controls the first robot 30 so that the first attracting device 31 moves to the first supporting position. The second robot controller 20 determines a second supporting position at which the second attracting device 41 supports the indefinite-shape object OB, based on the indefinite-shape object data. The second supporting position is a position at which the second attracting device 41 comes into contact with the indefinite-shape object OB. The second robot controller 20 controls the second robot 40 so that the second attracting device 41 moves to the second supporting position.

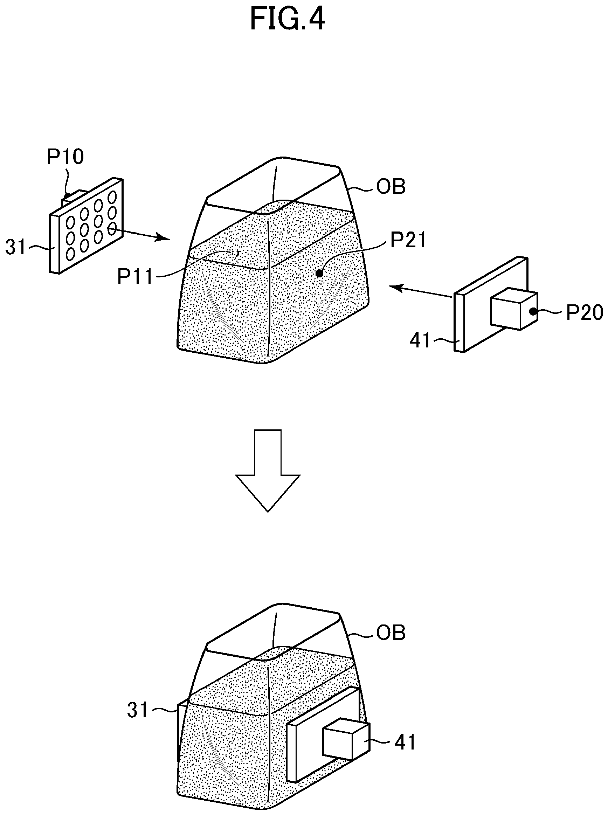

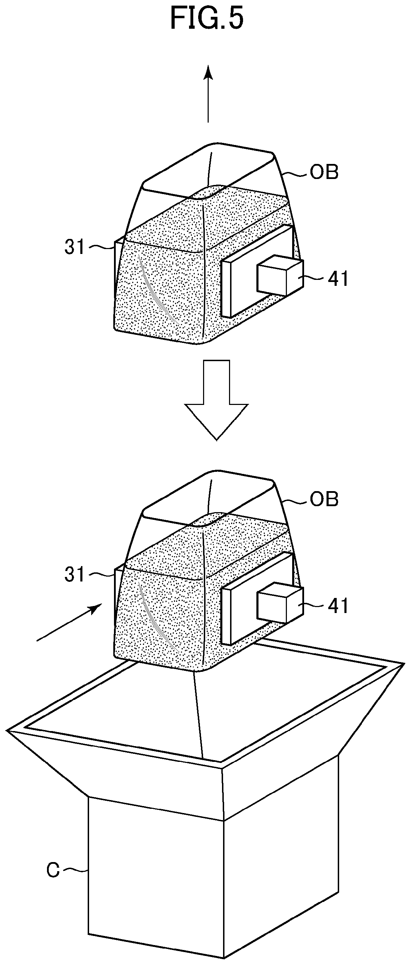

FIG. 4 to FIG. 6 are views for illustrating an example of the operations of the first robot 30 and the second robot 40. FIG. 4 to FIG. 6 show only the vicinities of tips (vicinities of the first attracting device 31 and the second attracting device 41) of the first robot 30 and the second robot 40. Reference symbol P10 of FIG. 4 indicates a first initial position that is an initial position of the first robot 30. Reference symbol P20 indicates a second initial position that is an initial position of the second robot 40. The first initial position P10 and the second initial position P20 are only required to be positions determined in advance. In FIG. 4 and the upper side of FIG. 5, the storage container C is omitted.

For example, as illustrated on the upper side of FIG. 4, the first robot controller 10 controls an orientation of the first attracting device 31 so that the suction cup of the first attracting device 31 is directed toward the indefinite-shape object OB at the first initial position P10. The first robot controller 10 controls the first robot 30 so that the first attracting device 31 approaches the first supporting position P11 from the first initial position P10. The second robot controller 20 controls an orientation of the second attracting device 41 so that the suction cup of the second attracting device 41 is directed toward the indefinite-shape object OB at the second initial position P20. The second robot controller 20 controls the second robot 40 so that the second attracting device 41 approaches the second supporting position P21 from the second initial position P20.

For example, as illustrated on the lower side of FIG. 4, when the first attracting device 31 moves to the first supporting position P11 and the first attracting device 31 attracts the indefinite-shape object OB with a certain degree of attraction pressure, the first robot controller 10 controls the first robot 30 so that the first attracting device 31 stops moving. When the second attracting device 41 moves to the second supporting position P21 and the second attracting device 41 attracts the indefinite-shape object OB with a certain degree of attraction pressure, the second robot controller 20 controls the second robot 40 so that the second attracting device 41 stops moving. With those series of operations, the indefinite-shape object OB is sandwiched between the first robot 30 and the second robot 40.

After that, the first robot controller 10 and the second robot controller 20 are synchronized with each other so as to control the first robot 30 and the second robot 40 so that the indefinite-shape object OB is conveyed to a position above the storage container C. For example, as illustrated on the upper side of FIG. 5, the first robot controller 10 controls the first robot 30 so that the first robot 30 conveys the indefinite-shape object OB in an upward direction. The second robot controller 20 controls the second robot 40 so that the second robot 40 conveys the indefinite-shape object OB in the upward direction. For example, as illustrated on the lower side of FIG. 5, the first robot controller 10 controls the first robot 30 so that the first robot 30 conveys the indefinite-shape object OB to the position above the storage container C. The second robot controller 20 controls the second robot 40 so that the second robot 40 conveys the indefinite-shape object OB to the position above the storage container C.

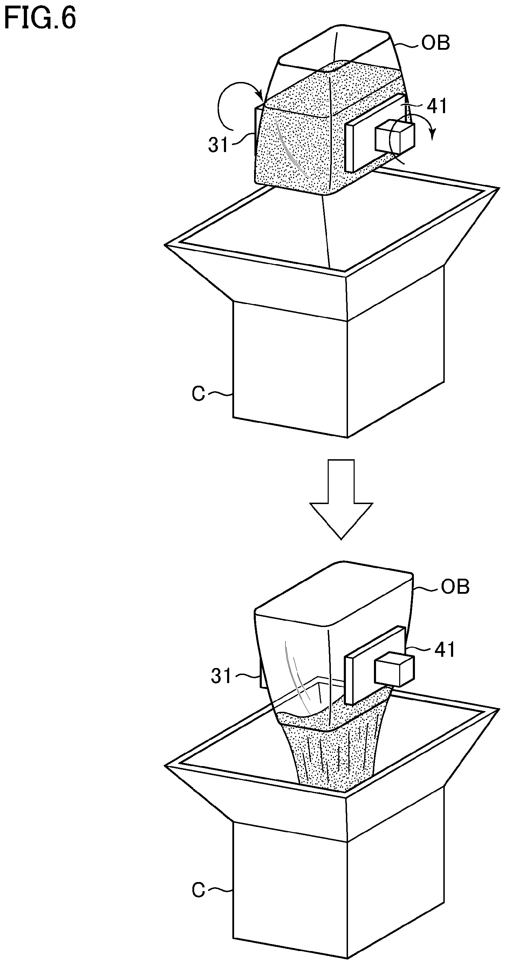

For example, as illustrated on the upper side of FIG. 6, when the indefinite-shape object OB moves to the position above the storage container C, the first robot controller 10 controls the first robot 30 so that the first robot 30 stops moving. When the indefinite-shape object OB moves to the position above the storage container C, the second robot controller 20 controls the second robot 40 so that the second robot 40 stops moving. After that, the first robot controller 10 controls the first robot 30 so that the first attracting device 31 is rotated. The second robot controller 20 controls the second robot 40 so that the second attracting device 41 is rotated.

For example, as illustrated on the lower side of FIG. 6, when the first attracting device 31 and the second attracting device 41 are rotated, the contents of the indefinite-shape object OB drop into the storage container C. When the contents start to drop into the storage container C, the indefinite-shape object OB is deformed. When the contents of the indefinite-shape object OB completely drop into the storage container C, the first robot controller 10 controls the first robot 30 so that the attraction by the first attracting device 31 is stopped. When the contents of the indefinite-shape object OB completely drop into the storage container C, the second robot controller 20 controls the second robot 40 so that the attraction by the second attracting device 41 is stopped after the indefinite-shape object OB is moved to another location. The indefinite-shape object OB in a state in which the contents are taken out (for example, only the poly bag) is arranged to another location.

For example, the first robot 30 and the second robot 40 perform operations in a similar flow every time the next indefinite-shape object OB is placed on the work table T. The robot control system 1 of this embodiment can convey the indefinite-shape object OB under a stable state by the first robot 30 and the second robot 40 supporting the indefinite-shape object OB in a state of being placed on the work table T and conveying the indefinite-shape object OB. Now, details of the robot control system 1 are described.

### [3. Functions implemented in Robot Control System]

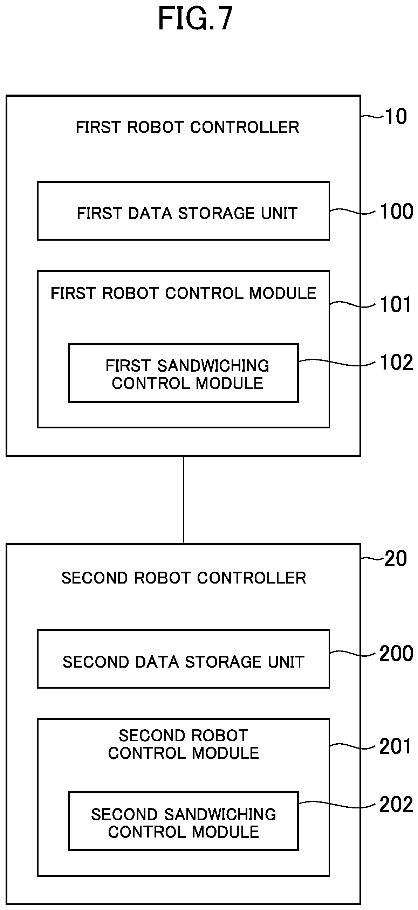

FIG. 7 is a diagram for illustrating an example of functions implemented in the robot control system 1.

### [3-1. Functions implemented in First Robot Controller]

For example, the first robot controller 10 includes a first data storage unit 100 and a first robot control module 101. The first data storage unit 100 is implemented by the storage unit 12. The first robot control module 101 is implemented by the CPU 11.

### [First Data Storage Unit]

The first data storage unit 100 stores data required for the first robot controller 10 to control the first robot 30. For example, the first data storage unit 100 stores programs including code (commands) indicating control content of the first robot 30. The programs can be written in any language, for example, a robot language or a ladder language. Any code used in those languages may be used. For example, the programs include at least one of code for moving the first robot 30, or code for changing the orientation (posture) of the first robot 30.

For example, the first data storage unit 100 stores a shape recognition program for allowing the first robot controller 10 to recognize the shape of the indefinite-shape object OB based on the photographed image generated by the camera 32. The shape recognition program includes a code for recognizing the shape of the indefinite-shape object OB based on the photographed image generated by the camera 32. For example, it is assumed that, when the surface of the indefinite-shape object OB is curved, the shape of this curved surface is also identified by the shape recognition program.

The shape recognition program may be a program used in publicly known object detection. In this embodiment, the camera 32 is a 3D camera, and hence the shape recognition program includes code for recognizing the shape of the indefinite-shape object OB based on a photographed image (an image including the depth between the camera 32 and the subject) photographed by the 3D camera. For example, the shape recognition program identifies the three-dimensional shape of the indefinite-shape object OB based on a plurality of photographed images taken by the camera 32. Further, when the position and the shape of the indefinite-shape object OB are the same every time, the processing for recognizing the position and the shape of the indefinite-shape object OB may be omitted.

For example, the first data storage unit 100 stores a first robot control program indicating a series of operations in which the first robot 30 supports and conveys the indefinite-shape object OB. The first robot control program includes code for determining the first supporting position P11 at which the first attracting device 31 supports the indefinite-shape object OB, based on the shape of the indefinite-shape object OB. The first robot control program includes code for determining a center point or the vicinity thereof (for example, a position within a predetermined distance from the center point) in a face on the first robot 30 side among side faces of the indefinite-shape object OB, as the first supporting position P11 of the first robot 30. The first robot control program includes code for calculating a path from the first initial position P10 of the first robot 30 to this determined first supporting position P11.

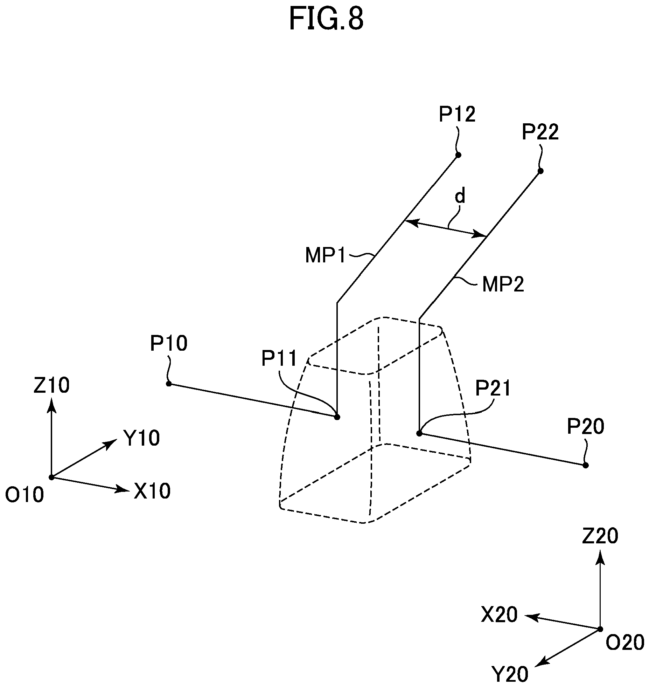

FIG. 8 is a view for illustrating an example of movement paths of the first robot 30 and the second robot 40. Reference symbol MP1 of FIG. 8 indicates a first movement path that is a movement path of the first robot 30. Reference symbol MP2 indicates a second movement path that is a movement path of the second robot 40. Any algorithm for robot control may be used as the algorithm for calculating the first movement path MP1. For example, the first robot control program may include code for calculating the movement path based on linear interpolation, circular interpolation, or spline interpolation. In this embodiment, the first robot control program includes, in addition to code indicating those algorithms, code for an operation by the first robot 30 to rotate the first attracting device 31.

For example, the first robot control program includes code for moving the first attracting device 31 to the first initial position P10. The first initial position P10 is specified in advance by a user of the robot control system 1. The first robot control program includes code for moving the first attracting device 31 from the first initial position P10 to the first supporting position P11. The first robot control program includes code for moving the first attracting device 31 from the first supporting position P11 to a first target position P12. The first target position P12 is only required to be a position determined in advance. For example, the first target position P12 is a position above the storage container C. The first robot control program includes code for rotating the first attracting device 31 at the first target position P12.

For example, the first robot control program includes code for controlling the orientation of the first attracting device 31 at each position. The orientation of the first attracting device 31 at the first initial position P10 may be any direction, and it is only required that the suction cup of the first attracting device 31 be directed to the side face of the indefinite-shape object OB by the time at which the first attracting device 31 reaches the first supporting position P11. For example, the first robot control program includes code for controlling the orientation of the first attracting device 31 so that the first attracting device 31 attracts the first supporting position P11 corresponding to the center of gravity of the indefinite-shape object OB. For example, a horizontal position of the first supporting position P11 may be the same as a horizontal position of the center of gravity of the indefinite-shape object OB. A vertical position of the first supporting position P11 may be lower than a vertical position of the center of gravity of the indefinite-shape object OB. In this embodiment, the orientation of the first attracting device 31 after reaching the first supporting position P11 is maintained constant during the conveyance of the indefinite-shape object OB, but the first robot control program may include code for changing the orientation of the first attracting device 31 after reaching the first supporting position P11.

For example, the first robot control program may include at least one of code for controlling ON/OFF of the suction performed by the first attracting device 31 or code for changing the suction force (attraction force) of the first attracting device 31. For example, the first robot control program includes code for turning on the suction performed by the first attracting device 31 by the time at which the first attracting device 31 reaches the first supporting position P11 or after the first attracting device 31 reaches the first supporting position P11. The first robot control program includes code for turning off the suction performed by the first attracting device 31 after the first attracting device 31 reaches the first target position P12 and the contents of the indefinite-shape object OB are dropped into the storage container C. The series of operations described above are defined in the first robot control program.

The data stored by the first data storage unit 100 is not limited to the above-mentioned example. For example, the first data storage unit 100 may store other programs other than the shape recognition program and the first robot control program. Further, the data stored by the first data storage unit 100 is not limited to programs. For example, the first data storage unit 100 may store first movement path data indicating the first movement path MP1. When the first robot controller 10 calculates the second movement path MP2, the first data storage unit 100 may store second movement path data indicating the second movement path MP2. For example, the first data storage unit 100 may store parameters which are referenced by the above-mentioned programs. The parameters may be any parameters used in robot control. For example, the parameters may be a position parameter indicating the position of a motor in the first robot 30 or values detected by various sensors such as a torque sensor.

### [First Robot Control Module]

The first robot control module 101 controls the first robot 30 based on the program and the parameter stored in the first data storage unit 100. The first robot control module 101 controls the first robot 30 so that the first robot 30 supports a part (a first part) of the indefinite-shape object OB placed on the work table T. This part is a part of the indefinite-shape object OB to be brought into contact with the first robot 30. For example, this part is a part of the indefinite-shape object OB to be brought into contact with the first attracting device 31. In this embodiment, "support" is a concept including attraction, suction, and gripping.

The work table T is an example of a predetermined location. Accordingly, a portion described as the work table T can be reread as the predetermined location. As described above, the indefinite-shape object OB may be placed at any location other than the work table T. Accordingly, the predetermined location is not limited to the work table T. The first robot control module 101 controls the first robot 30 so that the first robot 30 supports a part of the indefinite-shape object OB to convey the indefinite-shape object OB. In this embodiment, the operations of the first robot controller 10 and the second robot controller 20 are synchronized with each other, and hence the first robot control module 101 controls the first robot 30 so that the first robot 30 supports a part of the indefinite-shape object OB to convey the indefinite-shape object OB in cooperation with the second robot 40.

For example, the first robot control module 101 controls the first robot 30 based on the shape recognition program and the first robot control program. The first robot control module 101 executes the shape recognition program to recognize the position and the shape of the indefinite-shape object OB. The first robot control module 101 generates the indefinite-shape object data indicating the position and the shape of the indefinite-shape object OB, and stores the indefinite-shape object data into the first data storage unit 100. The first robot control module 101 transmits the indefinite-shape object data to the second robot controller 20. The indefinite-shape object data may be generated by another device such as a programmable logic controller (PLC) or a vision controller, and may be transmitted from this another device to each of the first robot controller 10 and the second robot controller 20.

For example, the first robot control module 101 determines the first movement path MP1 and the orientation of the first attracting device 31 on the first movement path MP1, based on the indefinite-shape object data and the first robot control program. The first robot control module 101 acquires the timing to turn on or off the first attracting device 31 designated in advance. The first robot control module 101 may turn on the first attracting device 31 at the timing at which the first attracting device 31 comes into contact with the indefinite-shape object OB or after the first attracting device 31 comes into contact with the indefinite-shape object OB (for example, after an elapse of a predetermined time period from when the first attracting device 31 has stopped) . The first robot control module 101 controls the first robot 30 so that the first attracting device 31 moves on this calculated first movement path MP1 with this calculated orientation and the suction by the first attracting device 31 is turned on or off at this calculated timing.

For example, the first robot control module 101 includes a first sandwiching control module 102. The first sandwiching control module 102 controls the first robot 30 so that the first robot 30 sandwiches and supports the indefinite-shape object OB between the first robot 30 and the second robot 40. The first sandwiching control module 102 controls the first robot 30 so that the first robot 30 applies a force to the indefinite-shape object OB in an opposite direction (in the example of FIG. 8, a direction from the first initial position P10 to the first supporting position P11) opposite to a direction in which the second robot 40 applies a force to the indefinite-shape object OB (in the example of FIG. 8, a direction from the second initial position P20 to the second supporting position P21). The opposite direction referred to here does not include only the exact opposite direction, and may allow some shift from the exact opposite direction.

In this embodiment, the first supporting position P11 is determined to be on the side opposite to the second supporting position P21 in the indefinite-shape object OB. Accordingly, the first sandwiching control module 102 calculates the first supporting position P11 so as to be on the side opposite to the second supporting position P21, and moves the first attracting device 31 to this calculated first supporting position P11 so that the first robot 30 sandwiches and supports the indefinite-shape object OB between the first robot 30 and the second robot 40. The flow of conveyance thereafter is the same as that described above. It is assumed that the first supporting position P11 and the second supporting position P21 are shared between the first robot controller 10 and the second robot controller 20.

The first robot control module 101 is not required to include the first sandwiching control module 102. For example, the first robot control module 101 controls the first robot 30 so that the first robot 30 moves to the first supporting position P11 before the second robot 40 comes into contact with the indefinite-shape object OB. The indefinite-shape object OB may be sandwiched between the first robot 30 and the second robot 40 through control by a second sandwiching control module 202 described later. The first robot control module 101 may control the first robot 30 so that the first robot 30 operates independently of the operation of the second robot 40. That is, the first robot control module 101 is not required to control the first robot 30 so that the first robot 30 and the second robot 40 cooperate with each other.

### [3-2. Functions implemented in Second Robot Controller]

For example, the second robot controller 20 includes a second data storage unit 200 and a second robot control module 201. The second data storage unit 200 is implemented by the storage unit 22. The second robot control module 201 is implemented by the CPU 21.

### [Second Data Storage Unit]

The second data storage unit 200 stores data required for the second robot controller 20 to control the second robot 40. For example, the second data storage unit 200 stores programs including code (commands) indicating control content of the second robot 40. The programs can be written in any language, for example, a robot language or a ladder language. Any code used in those languages may be used. For example, the programs include at least one of code for moving the second robot 40 or code for changing an orientation (posture) of the second robot 40.

For example, the second data storage unit 200 stores a second robot control program indicating a series of operations in which the second robot 40 supports and conveys the indefinite-shape object OB. The second robot control program includes code for determining the second supporting position P21 at which the second attracting device 41 supports the indefinite-shape object OB, based on the shape of the indefinite-shape object OB. The second robot control program includes code for determining a center point or the vicinity thereof (for example, a position within a predetermined distance from the center point) in a face on the second robot 40 side among side faces of the indefinite-shape object OB, as the second supporting position P21 of the second robot 40. The second robot control program includes code for calculating a path from the second initial position P20 of the second robot 40 to this determined second supporting position P21.

For example, any algorithm for robot control may be used as the algorithm for calculating the second movement path MP2. The second robot control program may include code for calculating the movement path based on linear interpolation, circular interpolation, or spline interpolation. In this embodiment, the second robot control program includes, in addition to code indicating those algorithms, code for an operation by the second robot 40 to rotate the second attracting device 41. The second movement path MP2 may be calculated by the first robot controller 10. In this case, the first robot control program includes the above-mentioned code for calculating the second movement path MP2.

For example, the second robot control program includes code for moving the second attracting device 41 to the second initial position P20. The second initial position P20 is specified in advance by a user of the robot control system 1. The second robot control program includes code for moving the second attracting device 41 from the second initial position P20 to the second supporting position P21. The second robot control program includes code for moving the second attracting device 41 from the second supporting position P21 to a second target position P22. The second target position P22 is only required to be a position determined in advance. For example, the second target position P22 is a position above the storage container C. The second robot control program includes code for rotating the second attracting device 41 at the second target position P22.

For example, the second robot control program includes code for controlling the orientation of the second attracting device 41 at each position. The orientation of the second attracting device 41 at the second initial position P20 may be any direction, and it is only required that the suction cup of the second attracting device 41 be directed to the side face of the indefinite-shape object OB by the time at which the second attracting device 41 reaches the second supporting position P21. For example, the second robot control program includes code for controlling the orientation of the second attracting device 41 so that the second attracting device 41 attracts the second supporting position P21 corresponding to the center of gravity of the indefinite-shape object OB. For example, a horizontal position of the second supporting position P21 may be the same as the horizontal position of the center of gravity of the indefinite-shape object OB. A vertical position of the second supporting position P21 may be lower than the vertical position of the center of gravity of the indefinite-shape object OB. In this embodiment, the orientation of the second attracting device 41 after reaching the first supporting position P11 is maintained constant during the conveyance of the indefinite-shape object OB, but the second robot control program may include code for changing the orientation of the second attracting device 41 after reaching the first supporting position P11.

For example, the second robot control program may include at least one of code for controlling ON/OFF of the suction performed by the second attracting device 41 or code for changing the suction force (attraction force) of the second attracting device 41. For example, the second robot control program includes code for turning on the suction performed by the second attracting device 41 by the time at which the second attracting device 41 reaches the second supporting position P21. The second robot control program includes code for turning off the suction performed by the second attracting device 41 after the second attracting device 41 reaches the second target position P22 and the contents of the indefinite-shape object OB are dropped into the storage container C. The series of operations described above are defined in the second robot control program.

The data stored by the second data storage unit 200 is not limited to the above-mentioned example. For example, the second data storage unit 200 may store other programs other than the second robot control program. Further, the data stored by the second data storage unit 200 is not limited to programs. For example, the second data storage unit 200 may store second movement path data indicating the second movement path MP2. For example, the second data storage unit 200 may store parameters which are referenced by the above-mentioned programs. The parameters may be any parameters used in robot control. For example, the parameters may be a position parameter indicating the position of a motor in the second robot 40, or values detected by various sensors such as a torque sensor.

### [Second Robot Control Module]

The second robot control module 201 controls the second robot 40 based on the program and the parameter stored in the second data storage unit 200. The second robot control module 201 controls the second robot 40 so that the second robot 40 supports a part (a second part) of the indefinite-shape object OB different from the above-mentioned part (part described in the processing of the first robot control module 101) to convey the indefinite-shape object OB in cooperation with the first robot 30.

The part of the indefinite-shape object OB different from the above-mentioned part is a part of the indefinite-shape object OB to be brought into contact with the second robot 40. In this embodiment, this different part is a part of the indefinite-shape object OB to be brought into contact with the second attracting device 41. This different part is another part other than the part supported by the first robot 30. For example, this different part may be a part of the indefinite-shape object OB on a side opposite to the part supported by the first robot 30. This different part is not limited to the part on the opposite side, and may be another part. For example, this different part may be a side face adjacent to the side face of the indefinite-shape object OB supported by the first robot 30. That is, instead of sandwiching the indefinite-shape object OB between the first robot 30 and the second robot 40, the second robot 40 may support the side face adjacent to the side face on which the first robot 30 supports the indefinite-shape object OB.

For example, the second robot control module 201 controls the second robot 40 based on the indefinite-shape object data received from the first robot controller 10 and the second robot control program. The second robot control module 201 converts the position and the shape of the indefinite-shape object OB indicated by the indefinite-shape object data received from the first robot controller 10 into coordinates using the second robot 40 as a reference. The second robot control module 201 stores this converted indefinite-shape object data into the second data storage unit 200. When the first robot controller 10 calculates the second movement path MP2, the second robot controller 20 receives the second movement path data from the first robot controller 10. The second robot control module 201 controls the second robot 40 based on the second movement path data received from the first robot controller 10.

For example, the second robot control module 201 determines the second movement path MP2 and the orientation of the second attracting device 41 on the second movement path MP2, based on the indefinite-shape object data whose coordinates have been converted and the second robot control program. The timing to turn on or off the second attracting device 41 may be designated in advance. For example, the second robot control module 201 acquires the timing to turn on or off the second attracting device 41 designated in advance. The second robot control module 201 may turn on the second attracting device 41 at the timing at which the second attracting device 41 comes into contact with the indefinite-shape object OB or after the second attracting device 41 comes into contact with the indefinite-shape object OB (for example, after an elapse of a predetermined time period from when the second attracting device 41 has stopped). The second robot control module 201 controls the second robot 40 so that the second attracting device 41 moves on this calculated second movement path MP2 with this calculated orientation and the suction by the second attracting device 41 is turned on or off at this calculated timing.

For example, the second robot control module 201 may calculate the second movement path MP2 based on the indefinite-shape object data whose coordinates have been converted, the first movement path data indicating the first movement path MP1, and the second robot control program. It is assumed that the first movement path data is transmitted as appropriate from the first robot controller 10 to the second robot controller 20. For example, the second robot control module 201 identifies a thickness "d" of the indefinite-shape object OB based on the indefinite-shape object data. The second robot control module 201 identifies the first supporting position P11 based on the first movement path data. The second robot control module 201 determines, as the second supporting position P21, a position separated from the first supporting position P11 by the thickness "d" to the side opposite to the indefinite-shape object OB as viewed from the first supporting position P11.

For example, the second robot control module 201 determines a path separated by the thickness "d" from a path from the first supporting position P11 to the first target position P12 within the first movement path MP1 indicated by the first movement path data, as a path from the second supporting position P21 to the second target position P22. The second robot control module 201 determines a path obtained by combining the path from the second initial position P20 to the second supporting position P21 and the path from the second supporting position P21 to the second target position P22 as the second movement path MP2.

The first movement path data may indicate a movement speed of the first robot 30. The second robot control module 201 identifies the movement speed of the first robot 30 from the first supporting position P11 to the first target position P12 based on the first movement path data. The second robot control module 201 may determine a movement speed of the second robot 40 from the second supporting position P21 to the second target position P22 so that an arrival time at which the second robot 40 arrives at the second target position P22 and an arrival time at which the first robot 30 arrives at the first target position P12 match each other. The second robot control module 201 may determine the movement speed of the second robot 40 so that the movement speed of the second robot 40 from the second supporting position P21 to the second target position P22 becomes the same as the movement speed of the first robot 30 from the first supporting position P11 to the first target position P12.

Further, the first movement path data may indicate a rotating direction and a rotating speed of the first attracting device 31 at the first target position P12. The second robot control module 201 identifies the rotating direction and the rotating speed of the first attracting device 31 at the first target position P12 based on the first movement path data. The second robot control module 201 may determine a rotating speed of the second attracting device 41 at the second target position P22 so that the rotating speed of the second attracting device 41 at the second target position P22 becomes the same as the rotating speed of the first attracting device 31 at the first target position P12. The rotating direction of the first attracting device 31 as viewed from the first robot 30 and the rotating direction of the second attracting device 41 as viewed from the second robot 40 are opposite to each other.

The first robot controller 10 may calculate the second movement path MP2 in place of the second robot controller 20. In this case, code similar to the code for calculating the second movement path MP2 within the second robot control program may be included in the first robot control program or another program. The first robot controller 10 calculates the second movement path MP2 based on the first robot control program or the another program. The first robot controller 10 determines the movement speed of the second robot 40 and the rotating direction and the rotating speed of the second attracting device 41 at the second target position P22.

For example, the first robot controller 10 transmits, to the second robot controller 20, the second movement path data indicating the second movement path MP2, the movement speed of the second robot 40, and the rotating direction and the rotating speed of the second attracting device 41 at the second target position P22. The second robot controller 20 receives the second movement path data. The second robot control module 201 may control the second robot 40 based on the second movement path data generated by the first robot controller 10. Conversely to the above, the second robot controller 20 may calculate the first movement path MP1 and the like and transmit data indicating calculation results of the first movement path MP1 and the like to the first robot controller 10.

When the first robot 30 has supported the indefinite-shape object OB at the first supporting position P11 (when the first attracting device 31 has completed the attraction of the indefinite-shape object OB), the first robot controller 10 transmits, to the second robot controller 20, a first support completion notification indicating that the support by the first robot 30 is completed. When the second robot 40 has supported the indefinite-shape object OB at the second supporting position P21 (when the second attracting device 41 has completed the attraction of the indefinite-shape object OB), the second robot controller 20 transmits, to the first robot controller 10, a second support completion notification indicating that the support by the second robot 40 is completed.

After that, the operations of the first robot controller 10 and the second robot controller 20 are synchronized with each other so that the first robot 30 and the second robot 40 move above the first movement path MP1 and the second movement path MP2, respectively. For example, the second robot control module 201 controls the movement of the second robot 40 so that a positional relationship between the first attracting device 31 and the second attracting device 41 is maintained constant. Similarly, the first robot control module 101 controls the movement of the first robot 30 so that the positional relationship between the first attracting device 31 and the second attracting device 41 is maintained constant.

For example, the second robot control module 201 includes a second sandwiching control module 202. The second sandwiching control module 202 controls the second robot 40 so that the first robot 30 and the second robot 40 sandwich and support the indefinite-shape object OB. In this embodiment, the second supporting position P21 is determined to be on the side opposite to the first supporting position P11 in the indefinite-shape object OB. Accordingly, the second sandwiching control module 202 calculates the second supporting position P21 so as to be on the side opposite to the first supporting position P11, and moves the second attracting device 41 to this calculated second supporting position P21 so that the second robot 40 sandwiches and supports the indefinite-shape object OB between the second robot 40 and the first robot 30. The flow of conveyance thereafter is the same as that described above.

The first supporting position P11 and the second supporting position P21 may be shared between the first robot controller 10 and the second robot controller 20. Further, when the second robot 40 has moved to the second supporting position P21, the second sandwiching control module 202 may detect, with a sensor for detecting the attraction force, an attraction force of the indefinite-shape object OB generated by the first robot 30 and the second robot 40, and may further advance (move) the second robot 40 toward the indefinite-shape object OB based on this attraction force. After the completion of the sandwiching of the indefinite-shape object OB is shared between the first robot controller 10 and the second robot controller 20, movements after the first supporting position P11 and the second supporting position P21 are controlled.

The second robot control module 201 is not required to include the second sandwiching control module 202. In this case, the second robot control module 201 may control the second robot 40 so that the second robot 40 moves to the first supporting position P11 before the first robot 30 comes into contact with the indefinite-shape object OB. The indefinite-shape object OB may be sandwiched between the first robot 30 and the second robot 40 through control by the second sandwiching control module 202. As described above, the indefinite-shape object OB is not required to be sandwiched between the first robot 30 and the second robot 40.

### [4. Processing to be Executed by Robot Control System]

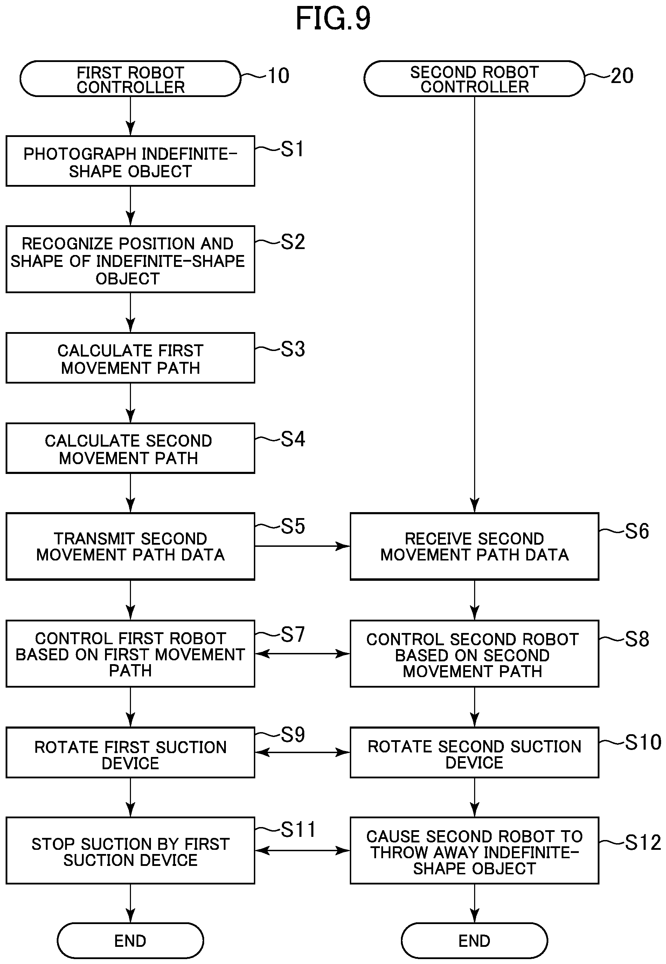

FIG. 9 is a flowchart for illustrating an example of processing to be executed by the robot control system 1. When the CPUs 11 and 21 execute programs stored in the storage units 12 and 22, the processing of FIG. 9 is executed. The processing of FIG. 9 is executed after the unpackaging of the packaging material packaging the indefinite-shape object OB is completed. The unpackaging of the packaging material can be detected by any method. For example, when the first robot 30 cuts the packaging material, the processing of FIG. 9 is executed after the cutting operation by the first robot 30 is completed and at least a part of the packaging material is removed.

As illustrated in FIG. 9, the first robot controller 10 controls the first robot 30 so that the first robot 30 photographs the indefinite-shape object OB by the camera 32 (Step S1). The first robot controller 10 recognizes the position and the shape of the indefinite-shape object OB based on the photographed image generated by the camera 32 and the shape recognition program (Step S2). The first robot controller 10 calculates the first movement path MP1 based on the position and the shape of the indefinite-shape object OB recognized in Step S2 and the robot control program (Step S3).

The first robot controller 10 calculates the second movement path MP2 based on the position and the shape of the indefinite-shape object OB recognized in Step S2 and the first robot control program (Step S4). In Step S4, the first robot controller 10 converts the coordinates of the indefinite-shape object data into coordinates using the second robot 40 as a reference, and calculates the second movement path MP2 based on the converted indefinite-shape object data, the first movement path data, and the first robot control program. The first robot controller 10 transmits, to the second robot controller 20, the second movement path data indicating the second movement path MP2 calculated in Step S4 (Step S5). In Step S5, the first robot controller 10 may transmit also the indefinite-shape object data. The second robot controller 20 receives the second movement path data from the first robot controller 10 (Step S6). In Step S6, the second robot controller 20 may receive also the indefinite-shape object data.

The first robot controller 10 controls the first robot 30 so that the first robot 30 supports a part of the indefinite-shape object OB to convey the indefinite-shape object OB based on the first movement path MP1 calculated in Step S3 (Step S7). The second robot controller 20 controls the second robot 40 so that the second robot 40 supports a part of the indefinite-shape object OB different from the part supported by the first robot 30 to convey the indefinite-shape object OB based on the second movement path MP2 indicated by the second movement path data received in Step S6 (Step S8). In the processing steps of Step S7 and Step S8, the first robot controller 10 and the second robot controller 20 communicate with each other to control the first robot 30 and the second robot 40 so that the first robot 30 and the second robot 40 convey the indefinite-shape object OB in synchronization with each other. Also in the following processing steps of Step S9 to Step S12, the first robot controller 10 and the second robot controller 20 communicate with each other so that the operations of the first robot 30 and the second robot 40 are synchronized with each other.

When the indefinite-shape object OB is moved to a position above the storage container C, the first robot controller 10 rotates the first attracting device 31 so that the opening portion of the indefinite-shape object OB is directed downward (Step S9). When the indefinite-shape object OB is moved to the position above the storage container C, the second robot controller 20 rotates the second attracting device 41 so that the opening portion of the indefinite-shape object OB is directed downward (Step S10). With the processing steps of Step S9 and Step S10, the contents of the indefinite-shape object OB drop into the storage container C. The first robot controller 10 controls the first robot 30 so that the suction performed by the first attracting device 31 is stopped (Step S11). After that, the first robot 30 moves to the first initial position P10. The second robot controller 20 controls the second robot 40 so that the second robot 40 throws away the indefinite-shape object OB (Step S12), and this processing is ended. After that, the second robot 40 moves to the second initial position P20.

### [5. Summary of Embodiment]

The robot control system 1 according to this embodiment controls the first robot 30 so that the first robot 30 supports a part of the indefinite-shape object OB placed at a predetermined location. The robot control system 1 controls the second robot 40 so that the second robot 40 supports a part of the indefinite-shape object OB different from the above-mentioned part to convey the indefinite-shape object OB in cooperation with the first robot 30. The second robot 40 supports the indefinite-shape object OB placed at the predetermined location to convey the indefinite-shape object OB in cooperation with the first robot 30, and hence the robot control system 1 can support and convey the indefinite-shape object OB under a stable state. For example, when the indefinite-shape object OB is supported and conveyed by only one robot, there is a possibility that the indefinite-shape object OB falls or the indefinite-shape object OB loses balance during conveyance. However, the first robot 30 and the second robot 40 support and convey the indefinite-shape object OB, and hence the possibility that the indefinite-shape object OB falls or the indefinite-shape object OB loses balance during conveyance can be reduced.

Further, the robot control system 1 controls the second robot 40 so that the second robot 40 sandwiches and supports the indefinite-shape object OB between the second robot 40 and the first robot 30. The indefinite-shape object OB is sandwiched between the first robot 30 and the second robot 40, and hence the robot control system 1 can support the indefinite-shape object OB under a more stable state.

Further, at least one of the first robot 30 or the second robot 40 includes an attracting device for attracting the indefinite-shape object OB. The robot control system 1 can support the indefinite-shape object OB under a more stable state by the attracting device attracting the indefinite-shape object OB. For example, as in this embodiment, when the first robot 30 includes the first attracting device 31 and the second robot 40 includes the second attracting device 41, the possibility that the indefinite-shape object OB falls or the indefinite-shape object OB loses balance during conveyance can be further reduced.

Further, the attracting device included in at least one of the first robot 30 or the second robot 40 is the suction device for sucking the indefinite-shape object OB. The robot control system 1 can support the indefinite-shape object OB under a more stable state by the suction device sucking the indefinite-shape object OB. For example, as in this embodiment, when both of the first robot 30 and the second robot 40 each include a suction device, the possibility that the indefinite-shape object OB falls or the indefinite-shape object OB loses balance during conveyance can be further reduced.

### [6. Modification Examples]

The present disclosure is not limited to the embodiment described above. The present disclosure can be modified suitably without departing from the spirit of the present disclosure.

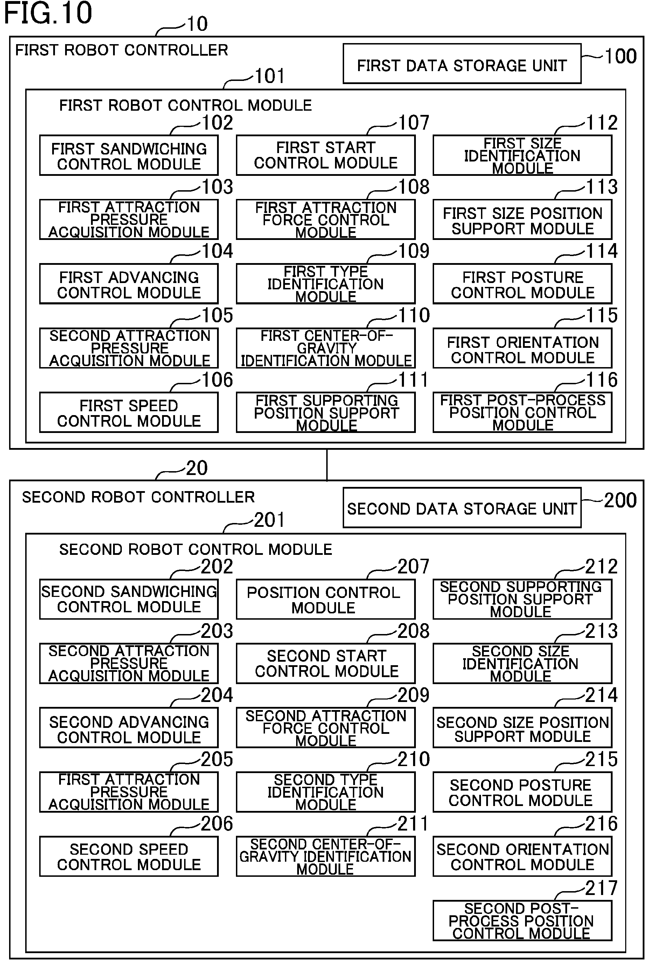

FIG. 10 is a diagram for illustrating an example of functions implemented in the robot control system 1 according to modification examples. For example, the first robot controller 10 includes a first attraction pressure acquisition module 103, a first advancing control module 104, a second attraction pressure acquisition module 105, a first speed control module 106, a first start control module 107, a first attraction force control module 108, a first type identification module 109, a first center-of-gravity identification module 110, a first supporting position support module 111, a first size identification module 112, a first size position support module 113, a first posture control module 114, a first orientation control module 115, and a first post-process position control module 116. Those functions are implemented by the CPU 11.

For example, the second robot controller 20 includes a second attraction pressure acquisition module 203, a second advancing control module 204, a first attraction pressure acquisition module 205, a second speed control module 206, a position control module 207, a second start control module 208, a second attraction force control module 209, a second type identification module 210, a second center-of-gravity identification module 211, a second supporting position support module 212, a second size identification module 213, a second size position support module 214, a second posture control module 215, a second orientation control module 216, and a second post-process position control module 217. Those functions are implemented by the CPU 21.

### [6-1. Modification Example 1]

For example, at least one of the first robot 30 or the second robot 40 may include an attraction pressure detector for detecting an attraction pressure of the attracting device. In Modification Example 1, description is given of a case in which both of the first robot 30 and the second robot 40 include the attraction pressure detector, but only one of the first robot 30 or the second robot 40 may include the attraction pressure detector.

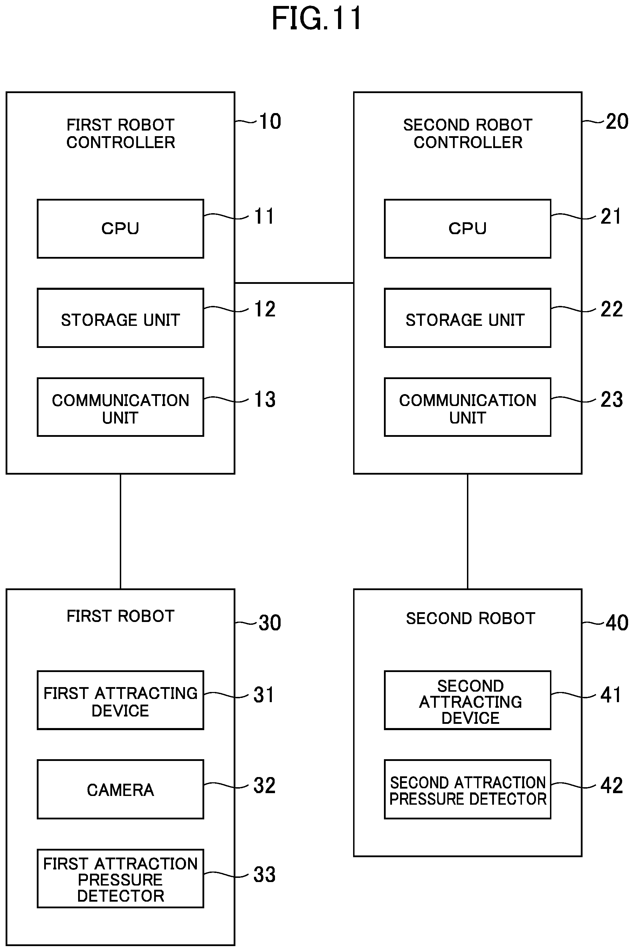

FIG. 11 is a diagram for illustrating an example of a hardware configuration of the robot control system 1 according to Modification Example 1. As illustrated in FIG. 11, the first robot 30 includes a first attraction pressure detector 33 for detecting a first attraction pressure that is an attraction pressure of the first attracting device 31. For example, the first attraction pressure detector 33 is a pressure sensor. When the first attracting device 31 is a suction device, the first attraction pressure detector 33 may be a vacuum gauge. The first attraction pressure detector 33 is arranged in the first attracting device 31. That is, the first attraction pressure detector 33 is arranged at a tip of the first robot 30.

For example, the second robot 40 includes a second attraction pressure detector 42 for detecting a second attraction pressure that is an attraction pressure of the second attracting device 41. The hardware configuration of the second attraction pressure detector 42 may be similar to that of the first attraction pressure detector 33. The second attraction pressure detector 42 is arranged in the second attracting device 41. That is, the second attraction pressure detector 42 is arranged at a tip of the second robot 40. In the following, when the first attraction pressure detector 33 and the second attraction pressure detector 42 are not distinguished from each other, the first attraction pressure detector 33 and the second attraction pressure detector 42 are simply referred to as "attraction pressure detector." Similarly, when the first attracting device 31 and the second attracting device 41 are not distinguished from each other, the first attracting device 31 and the second attracting device 41 are simply referred to as "attracting device."

The first robot controller 10 of Modification Example 1 includes the first attraction pressure acquisition module 103 and the first advancing control module 104. The second robot controller 20 includes the second attraction pressure acquisition module 203 and the second advancing control module 204. The first attraction pressure acquisition module 103 and the second attraction pressure acquisition module 203 are examples of an attraction pressure acquisition module for acquiring the attraction pressure. The robot control system 1 of Modification Example 1 includes two attraction pressure acquisition modules.

The first advancing control module 104 and the second advancing control module 204 are examples of an advancing control module for controlling at least one robot including the attraction pressure detector so that the attracting device advances (moves) toward the indefinite-shape object OB until the attraction pressure becomes equal to or larger than a threshold value. The robot control system 1 of Modification Example 1 includes two advancing control modules. That is, in Modification Example 1, the first robot 30 includes the first attraction pressure detector 33 and the second robot 40 includes the second attraction pressure detector 42, and hence the robot control system 1 includes the first advancing control module 104 and the second advancing control module 204.

When the first robot 30 includes the first attraction pressure detector 33 and the second robot 40 includes no second attraction pressure detector 42, the robot control system 1 is not required to include the second advancing control module 204. In this case, the first advancing control module 104 corresponds to the advancing control module. When the first robot 30 includes no first attraction pressure detector 33 and the second robot 40 includes the second attraction pressure detector 42, the robot control system 1 is not required to include the first advancing control module 104. In this case, the second advancing control module 204 corresponds to the advancing control module.

For example, the first attraction pressure acquisition module 103 acquires the first attraction pressure detected by the first attraction pressure detector 33. The first advancing control module 104 controls the first robot 30 so that the first attracting device 31 advances (moves) toward the indefinite-shape object OB until the first attraction pressure becomes equal to or larger than a first threshold value. The first advancing control module 104 repeatedly determines whether or not the first attraction pressure has become equal to or larger than the first threshold value. The first threshold value is only required to be a value determined in advance, and may be designated by the user.

For example, when the first advancing control module 104 determines that the first attraction pressure is smaller than the first threshold value, the first advancing control module 104 controls the first robot 30 so that the first attracting device 31 moves in a direction from the first initial position P10 to the first supporting position P11 (so that the first robot 30 advances (moves) while maintaining the current movement direction). When the first advancing control module 104 determines that the first attraction pressure is equal to or larger than the first threshold value, the first advancing control module 104 controls the first robot 30 so that the first attracting device 31 stops moving. That is, the first advancing control module 104 controls the first robot 30 so that the first attracting device 31 moves in the direction from the first initial position P10 to the first supporting position P11 until the first advancing control module 104 determines that the first attraction pressure is equal to or larger than the first threshold value.

In Modification Example 1, even when the first robot 30 reaches the first supporting position P11, when the first attraction pressure is not equal to or larger than the first threshold value, the first advancing control module 104 moves the first attracting device 31 in the direction from the first initial position P10 to the first supporting position P11. Conversely, even when the first robot 30 does not reach the first supporting position P11, when the first attracting device 31 has a pressure equal to or larger than the first threshold value, the first advancing control module 104 stops the first attracting device 31. The first movement path MP1 is updated in accordance with a position at which the first robot 30 stops advancing.

For example, the second attraction pressure acquisition module 203 acquires the second attraction pressure detected by the second attraction pressure detector 42. The second advancing control module 204 controls the second robot 40 so that the second attracting device 41 advances (moves) toward the indefinite-shape object OB until the second attraction pressure becomes equal to or larger than a second threshold value. The second advancing control module 204 repeatedly determines whether or not the second attraction pressure has become equal to or larger than the second threshold value. The second threshold value is only required to be a value determined in advance, and may be designated by the user.

For example, when the second advancing control module 204 determines that the second attraction pressure is smaller than the second threshold value, the second advancing control module 204 controls the second robot 40 so that the second attracting device 41 moves in a direction from the second initial position P20 to the second supporting position P21 (so that the second robot 40 advances (moves) while maintaining the current movement direction). When the second advancing control module 204 determines that the second attraction pressure is equal to or larger than the second threshold value, the second advancing control module 204 controls the second robot 40 so that the second attracting device 41 stops moving. That is, the second advancing control module 204 controls the second robot 40 so that the second attracting device 41 moves in the direction from the second initial position P20 to the second supporting position P21 until the second advancing control module 204 determines that the second attraction pressure is equal to or larger than the second threshold value.

In Modification Example 1, even when the second robot 40 reaches the second supporting position P21, when the second attraction pressure is not equal to or larger than the second threshold value, the second advancing control module 204 moves the second attracting device 41 in the direction from the second initial position P20 to the second supporting position P21. Conversely, even when the second robot 40 does not reach the second supporting position P21, when the second attracting device 41 has a pressure equal to or larger than the second threshold value, the second advancing control module 204 stops the second attracting device 41. The second movement path MP2 is updated in accordance with a position at which the second robot 40 stops advancing.

In the robot control system 1 of Modification Example 1, at least one of the first robot 30 or the second robot 40 includes the attraction pressure detector for detecting the attraction pressure of the attracting device. The robot control system 1 controls this at least one of the first robot 30 or the second robot 40 so that the attracting device advances (moves) toward the indefinite-shape object OB until the attraction pressure becomes equal to or larger than the threshold value. The attracting device advances (moves) toward the indefinite-shape object OB until the attraction pressure becomes equal to or larger than the threshold value, and hence the robot control system 1 can cause the attracting device to attract the indefinite-shape object OB more reliably.

### [6-2. Modification Example 2]

For example, the first attracting device 31 and the second attracting device 41 do not necessarily complete the attraction of the indefinite-shape object OB at the same time as each other. The completion of the attraction referred to here corresponds to a state in which the attraction pressure becomes equal to or larger than the threshold value as described in Modification Example 1. The first attracting device 31 sometimes completes the attraction earlier than the second attracting device 41. In this case, the movement speed of the second attracting device 41 may be decreased. Conversely, the second attracting device 41 sometimes completes the attraction earlier than the first attracting device 31. In this case, the movement speed of the first attracting device 31 may be decreased.

The first robot 30 in Modification Example 2 includes, similarly to Modification Example 1, the first attracting device 31 and the first attraction pressure detector 33 for detecting the first attraction pressure, which is an attraction pressure of the first attracting device 31. The second robot 40 includes, similarly to Modification Example 2, the second attracting device 41 and the second attraction pressure detector 42 for detecting the second attraction pressure, which is an attraction pressure of the second attracting device 41.

The first robot control module 101 in Modification Example 2 includes the first attraction pressure acquisition module 103, the second attraction pressure acquisition module 105, and the first speed control module 106. The first attraction pressure acquisition module 103 is similar to that in Modification Example 1. The second attraction pressure acquisition module 105 acquires the second attraction pressure. For example, the second attraction pressure acquisition module 105 acquires the second attraction pressure from the second robot controller 20. The second attraction pressure acquisition module 105 requests the second attraction pressure from the second robot controller 20. When the second robot controller 20 receives the request for the second attraction pressure, the second robot controller 20 transmits the second attraction pressure to the first robot controller 10. The second attraction pressure acquisition module 105 repeatedly acquires the newest second attraction pressure from the second robot controller 20. The second attraction pressure acquisition module 105 may acquire the second attraction pressure from another device other than the second robot controller 20 or directly from the second robot 40. In this case, the first robot controller 10 is connected to this another device or the second robot 40.

The first speed control module 106 controls the first robot 30 so that, when the first attraction pressure becomes equal to or larger than the first threshold value, the first attracting device 31 stops moving, and when the second attraction pressure becomes equal to or larger than the second threshold value before the first attraction pressure becomes equal to or larger than the first threshold value, the movement speed of the first attracting device 31 is decreased. For example, the first speed control module 106 determines whether or not the first attraction pressure has become equal to or larger than the first threshold value. The first speed control module 106 determines whether or not the second attraction pressure has become equal to or larger than the second threshold value. The first speed control module 106 repeatedly executes those determinations based on the newest first attraction pressure and second attraction pressure.

For example, when it is determined that the second attraction pressure is smaller than the second threshold value and it is determined that the first attraction pressure is equal to or larger than the first threshold value, the first speed control module 106 controls the first robot 30 so that the first attracting device 31 stops moving. When it is determined that the second attraction pressure is equal to or larger than the second threshold value and it is determined that the first attraction pressure is smaller than the first threshold value, the first speed control module 106 controls the first robot 30 so that the movement speed of the first attracting device 31 becomes slower than the previous movement speed. The movement speed in this case is only required to be a movement speed determined in advance. After that, when it is determined that the first attraction pressure is equal to or larger than the first threshold value, the first speed control module 106 controls the first robot 30 so that the first attracting device 31 stops moving.

The second robot control module 201 includes the second attraction pressure acquisition module 203, the first attraction pressure acquisition module 205, and the second speed control module 206. The second attraction pressure acquisition module 203 is similar to that in Modification Example 1. The first attraction pressure acquisition module 205 acquires the first attraction pressure. For example, the first attraction pressure acquisition module 205 acquires the first attraction pressure from the first robot controller 10. The first attraction pressure acquisition module 205 requests the first attraction pressure from the first robot controller 10. When the first robot controller 10 receives the request for the first attraction pressure, the first robot controller 10 transmits the first attraction pressure to the second robot controller 20. The first attraction pressure acquisition module 205 repeatedly acquires the newest first attraction pressure from the first robot controller 10. The first attraction pressure acquisition module 205 may acquire the first attraction pressure from another device other than the first robot controller 10 or directly from the first robot 30. In this case, the second robot controller 20 is connected to this another device or the first robot 30.

The second speed control module 206 controls the second robot 40 so that, when the second attraction pressure becomes equal to or larger than the second threshold value, the second attracting device 41 stops moving, and when the first attraction pressure becomes equal to or larger than the first threshold value before the second attraction pressure becomes equal to or larger than the second threshold value, the movement speed of the second attracting device 41 is decreased. For example, the second speed control module 206 determines whether or not the first attraction pressure has become equal to or larger than the first threshold value. The second speed control module 206 determines whether or not the second attraction pressure has become equal to or larger than the second threshold value. The second speed control module 206 repeatedly executes those determinations based on the newest first attraction pressure and second attraction pressure.

For example, when it is determined that the first attraction pressure is smaller than the first threshold value and it is determined that the second attraction pressure is equal to or larger than the second threshold value, the second speed control module 206 controls the second robot 40 so that the second attracting device 41 stops moving. When it is determined that the first attraction pressure is equal to or larger than the first threshold value and it is determined that the second attraction pressure is smaller than the second threshold value, the second speed control module 206 controls the second robot 40 so that the movement speed of the second attracting device 41 becomes slower than the previous movement speed. The movement speed in this case is only required to be a movement speed determined in advance. After that, when it is determined that the second attraction pressure is equal to or larger than the second threshold value, the second speed control module 206 controls the second robot 40 so that the second attracting device 41 stops moving.

The robot control system 1 of Modification Example 2 controls the first robot 30 so that, when the first attraction pressure becomes equal to or larger than the first threshold value, the first attracting device 31 stops moving, and when the second attraction pressure becomes equal to or larger than the second threshold value before the first attraction pressure becomes equal to or larger than the first threshold value, the movement speed of the first attracting device 31 is decreased. In this manner, the robot control system 1 can prevent the indefinite-shape object OB from moving because the first attracting device 31 has moved toward the indefinite-shape object OB even though the first attracting device 31 has sufficiently attracted the indefinite-shape object OB. Moreover, in a case in which the second attracting device 41 completes the attraction earlier, when the first attracting device 31 hits the indefinite-shape object OB hard, there is a possibility that the indefinite-shape object OB is deformed and moved. When the first attracting device 31 slowly approaches the indefinite-shape object OB, this possibility can be reduced.

In addition, the robot control system 1 controls the second robot 40 so that, when the second attraction pressure becomes equal to or larger than the second threshold value, the second attracting device 41 stops moving, and when the first attraction pressure becomes equal to or larger than the first threshold value before the second attraction pressure becomes equal to or larger than the second threshold value, the movement speed of the second attracting device 41 is decreased. In this manner, the robot control system 1 can prevent the indefinite-shape object OB from moving because the second attracting device 41 has moved toward the indefinite-shape object OB even though the second attracting device 41 has sufficiently attracted the indefinite-shape object OB. Moreover, in a case in which the first attracting device 31 completes the attraction earlier, when the second attracting device 41 hits the indefinite-shape object OB hard, there is a possibility that the indefinite-shape object OB is deformed and moved. When the second attracting device 41 slowly approaches the indefinite-shape object OB, this possibility can be reduced.

### [6-3. Modification Example 3]

For example, the second robot control module 201 may include the position control module 207 for determining the second supporting position P21 at which the second robot 40 supports the indefinite-shape object OB, based on the first supporting position P11 at which the first robot 30 supports the indefinite-shape object OB. For example, the second robot control module 201 determines the second supporting position P21 so that the second supporting position P21 matches the first supporting position P11. The phrase "the second supporting position P21 matches the first supporting position P11" means that a relative positional relationship between the first supporting position P11 and the second supporting position P21 becomes a predetermined relationship. Calculating the second supporting position P21 based on the first supporting position P11 corresponds to matching the second supporting position P21 with the first supporting position P11. Control of the position control module 207 includes the contents described to some extent also in the embodiment as the control of the second robot control module 201.

For example, the position control module 207 acquires the first supporting position P11 from the first robot controller 10, and determines the second supporting position P21 so that the relative positional relationship between the second supporting position P21 and the first supporting position P11 becomes a predetermined relationship. In the example of FIG. 8, the position control module 207 determines a position separated from the first supporting position P11 by an amount corresponding to the thickness "d" of the indefinite-shape object OB to the side opposite to the indefinite-shape object OB, as the second supporting position P21. The position control module 207 may determine a position separated to some extent from this position as the second supporting position P21. Control of the second robot 40 performed after the second supporting position P21 is determined may be similar to that in the embodiment.

The robot control system 1 of Modification Example 3 determines the second supporting position P21 based on the first supporting position P11. The robot control system 1 determines the second supporting position P21 based on the first supporting position P11, and hence the robot control system 1 can support the indefinite-shape object OB under a more stable state.

### [6-4. Modification Example 4]

For example, the robot control system 1 may include the start control module for starting attraction by the attracting device after the attracting device comes into contact with the indefinite-shape object OB. In Modification Example 4, the first robot controller 10 includes the first start control module 107, and the second robot controller 20 includes the second start control module 208. The first start control module 107 and the second start control module 208 are examples of the start control module. The first robot controller 10 is not required to include the first start control module 107, and only the second robot controller 20 may include the second start control module 208. Conversely, the second robot controller 20 is not required to include the second start control module 208, and only the first robot controller 10 may include the first start control module 107.

For example, the first start control module 107 determines whether or not the first attracting device 31 has come into contact with the indefinite-shape object OB. In Modification Example 4, the first attracting device 31 includes a contact sensor, and the first start control module 107 determines whether or not the first attracting device 31 has come into contact with the indefinite-shape object OB based on a detection signal obtained by the contact sensor of the first attracting device 31. The first start control module 107 may determine whether or not the first attracting device 31 has come into contact with the indefinite-shape object OB by other methods. For example, the first start control module 107 may determine whether or not the first attracting device 31 has come into contact with the indefinite-shape object OB based on a change of torque detected by a torque sensor in the first robot 30. As another example, the first start control module 107 may determine whether or not the first attracting device 31 has come into contact with the indefinite-shape object OB by analyzing the photographed image generated by the camera 32.

For example, when the first start control module 107 does not determine that the first attracting device 31 has come into contact with the indefinite-shape object OB, the first start control module 107 does not start the attraction by the first attracting device 31. When the first start control module 107 determines that the first attracting device 31 has come into contact with the indefinite-shape object OB, the first start control module 107 starts the attraction by the first attracting device 31. When the first start control module 107 determines that the first attracting device 31 has come into contact with the indefinite-shape object OB, the first start control module 107 transmits a signal for turning on the suction to the first attracting device 31. When the first attracting device 31 receives this signal, the first attracting device 31 starts the suction. The processing of the first robot control module 101 performed after the first attracting device 31 starts the suction may be similar to that in the embodiment.

For example, the second start control module 208 determines whether or not the second attracting device 41 has come into contact with the indefinite-shape object OB. In Modification Example 4, the second attracting device 41 includes a contact sensor, and the second start control module 208 determines whether or not the second attracting device 41 has come into contact with the indefinite-shape object OB based on a detection signal obtained by the contact sensor of the second attracting device 41. The second start control module 208 may determine whether or not the second attracting device 41 has come into contact with the indefinite-shape object OB by other methods. For example, the second start control module 208 may determine whether or not the second attracting device 41 has come into contact with the indefinite-shape object OB based on a change of torque detected by a torque sensor in the second robot 40. As another example, the second start control module 208 may determine whether or not the second attracting device 41 has come into contact with the indefinite-shape object OB by analyzing the photographed image generated by the camera 32.

For example, when the second start control module 208 does not determine that the second attracting device 41 has come into contact with the indefinite-shape object OB, the second start control module 208 does not start the attraction by the second attracting device 41. When the second start control module 208 determines that the second attracting device 41 has come into contact with the indefinite-shape object OB, the second start control module 208 starts the attraction by the second attracting device 41. When the second start control module 208 determines that the second attracting device 41 has come into contact with the indefinite-shape object OB, the second start control module 208 transmits a signal for turning on the suction to the second attracting device 41. When the second attracting device 41 receives this signal, the second attracting device 41 starts the suction. The processing of the second robot control module 201 performed after the second attracting device 41 starts the suction may be similar to that in the embodiment.

The robot control system 1 of Modification Example 4 starts the attraction by the attracting device after the attracting device comes into contact with the indefinite-shape object OB. The attraction is started after the attracting device comes into contact with the indefinite-shape object OB, and hence the robot control system 1 can support the indefinite-shape object OB under a more stable state. For example, when the attracting device starts the suction before coming into contact with the indefinite-shape object OB, there is a possibility that the surface of the indefinite-shape object OB wrinkles and thus the indefinite-shape object OB cannot be sucked well, but the robot control system 1 can reduce this possibility.

### [6-5. Modification Example 5]

For example, the robot control system 1 may include an attraction force control module for controlling the attracting device so that the attraction force corresponding to the indefinite-shape object OB is obtained (adopted, applied). In Modification Example 5, the first robot controller 10 includes the first attraction force control module 108, and the second robot controller 20 includes the second attraction force control module 209. The first attraction force control module 108 and the second attraction force control module 209 are examples of the attraction force control module. The first robot controller 10 is not required to include the first attraction force control module 108, and only the second robot controller 20 may include the second attraction force control module 209. Conversely, the second robot controller 20 is not required to include the second attraction force control module 209, and only the first robot controller 10 may include the first attraction force control module 108.

For example, the first attraction force control module 108 may control the first attracting device 31 so that, as described in Modification Example 6 later, a first attraction force corresponding to the type of the indefinite-shape object OB is obtained (adopted, applied). In Modification Example 5, as a method other than that in Modification Example 6, as an example, description is given of a case in which the first attraction force control module 108 controls the first attracting device 31 so that a first attraction force corresponding to the size of the indefinite-shape object OB is obtained (adopted, applied). The first attraction force control module 108 may identify the size of the indefinite-shape object OB based on the photographed image captured by the camera 32. When a size parameter indicating the size of the indefinite-shape object OB input by the user is stored in the first data storage unit 100, the first attraction force control module 108 may identify the size of the indefinite-shape object OB based on the size parameter.

For example, the first attraction force control module 108 controls the first attracting device 31 so that the first attraction force becomes larger as the size of the indefinite-shape object OB becomes larger. It is assumed that data indicating the relationship between the size of the indefinite-shape object OB and the first attraction force is stored in the first data storage unit 100. The first attraction force control module 108 controls the first attraction force based on this data. The first attraction force control module 108 may control the first attracting device 31 so that a first attraction force corresponding to, other than the size of the indefinite-shape object OB, a position, a shape, or a material of the indefinite-shape object OB is obtained (adopted, applied).

For example, the second attraction force control module 209 may control the second attracting device 41 so that, as described in Modification Example 6 later, a second attraction force corresponding to the type of the indefinite-shape object OB is obtained (adopted, applied). In Modification Example 5, as a method other than that in Modification Example 6, as an example, description is given of a case in which the second attraction force control module 209 controls the second attracting device 41 so that a second attraction force corresponding to the size of the indefinite-shape object OB is obtained (adopted, applied). The second attraction force control module 209 may identify the size of the indefinite-shape object OB based on the photographed image captured by the camera 32. When a size parameter indicating the size of the indefinite-shape object OB input by the user is stored in the second data storage unit 200, the second attraction force control module 209 may identify the size of the indefinite-shape object OB based on the size parameter.

For example, the second attraction force control module 209 controls the second attracting device 41 so that the second attraction force becomes larger as the size of the indefinite-shape object OB becomes larger. It is assumed that data indicating the relationship between the size of the indefinite-shape object OB and the second attraction force is stored in the second data storage unit 200. The second attraction force control module 209 controls the second attraction force based on this data. The second attraction force control module 209 may control the second attracting device 41 so that a second attraction force corresponding to, other than the size of the indefinite-shape object OB, a position, a shape, or a material of the indefinite-shape object OB is obtained (adopted, applied).

The robot control system 1 of Modification Example 5 controls the attracting device so that an attraction force corresponding to the indefinite-shape object OB is obtained (adopted, applied). The attracting device attracts the indefinite-shape object OB with the attraction force corresponding to the indefinite-shape object OB, and hence the robot control system 1 can support the indefinite-shape object OB under a state optimum for the indefinite-shape object OB.

### [6-6. Modification Example 6]

For example, as described in Modification Example 5, when the attraction force corresponding to the indefinite-shape object OB is obtained (adopted, applied), the robot control system 1 may obtain the attraction force corresponding to the type of the indefinite-shape object OB. The robot control system 1 of Modification Example 6 further includes a type identification module for identifying the type of the indefinite-shape object OB. For example, the first robot controller 10 includes the first type identification module 109, and the second robot controller 20 includes the second type identification module 210. The first type identification module 109 and the second type identification module 210 are examples of the type identification module. The first robot controller 10 is not required to include the first type identification module 109, and only the second robot controller 20 may include the second type identification module 210. Conversely, the second robot controller 20 is not required to include the second type identification module 210, and only the first robot controller 10 may include the first type identification module 109.

For example, when the user designates the type of the indefinite-shape object OB, it is assumed that a type parameter indicating the type designated by the user is stored in advance in the first data storage unit 100 and the second data storage unit 200. The first type identification module 109 identifies the type of the indefinite-shape object OB based on the type parameter. The second type identification module 210 identifies the type of the indefinite-shape object OB based on the type parameter.

The method of identifying the type of the indefinite-shape object OB is not limited to designation by the user. For example, the first type identification module 109 may identify the type of the indefinite-shape object OB by analyzing the photographed image generated by the camera 32. The second type identification module 210 may identify the type of the indefinite-shape object OB by analyzing the photographed image generated by the camera 32. The second type identification module 210 may acquire an identification result obtained by the first type identification module 109 instead of analyzing the image by itself.

The attraction force control module in Modification Example 6 controls the attracting device so that an attraction force corresponding to the type of the indefinite-shape object OB is obtained (adopted, applied). In Modification Example 6, the first attracting device 31 and the second attracting device 41 are each a suction device, and hence a suction force obtained by the suction device corresponds to the attraction force. When another attracting device other than the suction device is used, the attraction force is only required to be an attraction force corresponding to this another attracting device. For example, when the another attracting device is a sucker, a pressing force of the sucker with respect to the indefinite-shape object OB corresponds to the attraction force. When the another attracting device is a robot hand, a gripping force of the robot hand corresponds to the attraction force.

For example, as an example, description is given of a case in which the first attraction force control module 108 controls the first attracting device 31 so that a first attraction force corresponding to the type of the indefinite-shape object OB is obtained (adopted, applied). For example, when the indefinite-shape object OB is of a first type (for example, a paper bag), the first attraction force control module 108 controls the first attracting device 31 so that the first attraction force becomes larger than that in a case in which the indefinite-shape object OB is of a second type (for example, a polyvinyl bag). It is assumed that data indicating the relationship between the type of the indefinite-shape object OB and the first attraction force is stored in the first data storage unit 100. The first attraction force control module 108 controls the first attraction force based on this data.

For example, as an example, description is given of a case in which the second attraction force control module 209 controls the second attracting device 41 so that a second attraction force corresponding to the type of the indefinite-shape object OB is obtained (adopted, applied). For example, when the indefinite-shape object OB is of the second type, the second attraction force control module 209 controls the second attracting device 41 so that the second attraction force becomes larger than that in a case in which the indefinite-shape object OB is of the first type. It is assumed that data indicating the relationship between the type of the indefinite-shape object OB and the second attraction force is stored in the second data storage unit 200. The second attraction force control module 209 controls the second attraction force based on this data.

The robot control system 1 of Modification Example 6 identifies the type of the indefinite-shape object OB. The robot control system 1 controls the attracting device so that an attraction force corresponding to the type of the indefinite-shape object OB is obtained (adopted, applied). The attracting device attracts the indefinite-shape object OB with an attraction force corresponding to the type of the indefinite-shape object OB, and hence the robot control system 1 can support the indefinite-shape object OB under a more stable state.

### [6-7. Modification Example 7]

For example, at least one of the first robot 30 or the second robot 40 may support a supporting position corresponding to the center of gravity of the indefinite-shape object OB. For example, the supporting position is a position having the same height as that of the center of gravity in the surface of the indefinite-shape object OB. The supporting position is a position within a predetermined distance from the position having the same height as that of the center of gravity in the surface of the indefinite-shape object OB.

The robot control system 1 of Modification Example 7 includes a center-of-gravity identification module for identifying the center of gravity of the indefinite-shape object OB placed at the predetermined location. For example, the first robot controller 10 includes the first center-of-gravity identification module 110, and the second robot controller 20 includes the second center-of-gravity identification module 211. The first center-of-gravity identification module 110 and the second center-of-gravity identification module 211 are examples of the center-of-gravity identification module. The first robot controller 10 is not required to include the first center-of-gravity identification module 110, and only the second robot controller 20 may include the second center-of-gravity identification module 211. Conversely, the second robot controller 20 is not required to include the second center-of-gravity identification module 211, and only the first robot controller 10 may include the first center-of-gravity identification module 110.

For example, the first center-of-gravity identification module 110 identifies the center of gravity of the indefinite-shape object OB based on the photographed image indicating the indefinite-shape object OB captured by the camera 32. The first center-of-gravity identification module 110 is only required to identify the center of gravity of the indefinite-shape object OB by executing image analysis by a method determined in advance. The first center-of-gravity identification module 110 may identify a center point of the indefinite-shape object OB as the center of gravity of the indefinite-shape object OB. The first center-of-gravity identification module 110 may input the photographed image to a machine learning model in which centers of gravity of various objects are learned as training data, and may acquire the center of gravity output from the machine learning model. The second center-of-gravity identification module 211 may identify the center of gravity by the same method as that of the first center-of-gravity identification module 110, or may acquire the center of gravity identified by the first center-of-gravity identification module 110 from the first robot controller 10. The center of gravity may be designated by the user as a parameter instead of being obtained from the photographed image.

The robot control system 1 of Modification Example 7 includes a supporting position support module for controlling at least one of the first robot 30 or the second robot 40 so that the at least one of the first robot 30 or the second robot 40 supports the indefinite-shape object OB at the supporting position corresponding to the center of gravity. For example, the first robot controller 10 includes the first supporting position support module 111. The second robot controller 20 includes the second supporting position support module 212. The first supporting position support module 111 and the second supporting position support module 212 are examples of the supporting position support module. The first robot controller 10 is not required to include the first supporting position support module 111, and only the second robot controller 20 may include the second supporting position support module 212. Conversely, the second robot controller 20 is not required to include the second supporting position support module 212, and only the first robot controller 10 may include the first supporting position support module 111.

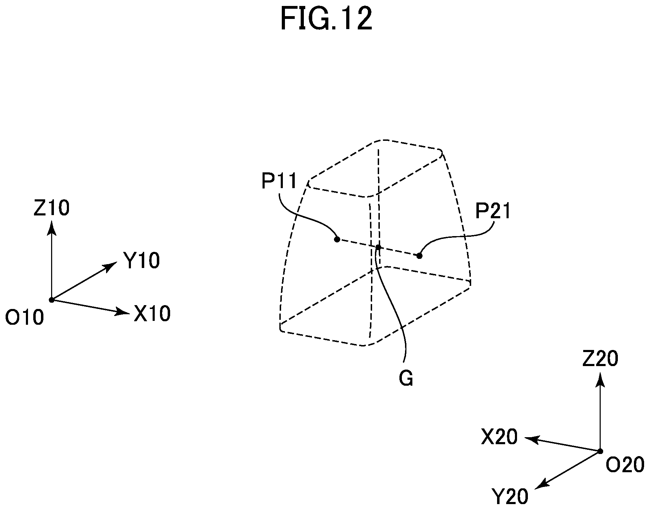

FIG. 12 is a view for illustrating an example of the first supporting position P11 and the second supporting position P21 that correspond to the center of gravity. In the example of FIG. 12, the center of gravity is represented by G. The first supporting position support module 111 determines a position having the same height as that of the center of gravity G in a surface of the indefinite-shape object OB on the first robot 30 side as the first supporting position P11. The second supporting position support module 212 determines a position having the same height as that of the center of gravity G in the surface of the indefinite-shape object OB on the second robot 40 side as the second supporting position P21. The method of determining the first supporting position P11 and the second supporting position P21 is different from that in the embodiment, but the method of controlling the first robot 30 and the second robot 40 after the first supporting position P11 and the second supporting position P21 are determined may be similar to that in the embodiment.

The robot control system 1 of Modification Example 7 identifies the center of gravity of the indefinite-shape object OB placed at the predetermined location. The robot control system 1 controls at least one of the first robot 30 or the second robot 40 so that the at least one of the first robot 30 or the second robot 40 supports the indefinite-shape object OB at the supporting position corresponding to the center of gravity. At least one of the first robot 30 or the second robot 40 supports the indefinite-shape object OB at the supporting position corresponding to the center of gravity, and hence the robot control system 1 can support the indefinite-shape object OB under a more stable state.

Further, the robot control system 1 identifies the center of gravity based on the image indicating the indefinite-shape object OB captured by the camera 32. The robot control system 1 can reliably identify the center of gravity of the indefinite-shape object OB by the camera 32.

### [6-8. Modification Example 8]

For example, in Modification Example 7, the supporting position support module may control at least one robot so that the at least one robot supports the indefinite-shape object OB at a first horizontal position corresponding to the center of gravity in a horizontal direction and supports the indefinite-shape object OB at a predetermined first vertical position in a vertical direction. In Modification Example 8, similarly to Modification Example 7, description is given of a case in which the first supporting position support module 111 and the second supporting position support module 212 are examples of the supporting position support module.

For example, the first supporting position support module 111 determines the first supporting position P11 so that the position of the center of gravity in the horizontal direction and the first supporting position P11 in the horizontal direction become the same or within a predetermined distance and the first supporting position P11 in the vertical direction becomes a predetermined position. The second supporting position support module 212 determines the second supporting position P21 so that the position of the center of gravity in the horizontal direction and the second supporting position P21 in the horizontal direction become the same or within a predetermined distance and the second supporting position P21 in the vertical direction becomes a predetermined position. The method of determining the first supporting position P11 and the second supporting position P21 is different from that in the embodiment, but the method of controlling the first robot 30 and the second robot 40 after the first supporting position P11 and the second supporting position P21 are determined may be similar to that in the embodiment.

The robot control system 1 of Modification Example 8 controls at least one of the first robot 30 or the second robot 40 so that the at least one of the first robot 30 or the second robot 40 supports the indefinite-shape object OB at the first horizontal position corresponding to the center of gravity in the horizontal direction and supports the indefinite-shape object OB at the predetermined first vertical position in the vertical direction. At least one of the first robot 30 or the second robot 40 supports the indefinite-shape object OB at the position corresponding to the center of gravity of the indefinite-shape object OB in the horizontal direction and supports the indefinite-shape object OB at the predetermined position in the vertical direction, and hence the robot control system 1 can support the indefinite-shape object OB under a more stable state.

### [6-9. Modification Example 9]

For example, in Modification Example 7, the supporting position support module may control at least one of the first robot 30 or the second robot 40 so that the at least one of the first robot 30 or the second robot 40 supports the indefinite-shape object OB at a second vertical position lower than the center of gravity in the vertical direction. In Modification Example 9, description is given of a case in which, similarly to Modification Example 7, the first supporting position support module 111 and the second supporting position support module 212 are examples of the supporting position support module.

For example, the first supporting position support module 111 determines the first supporting position P11 so that a distance in a downward direction with respect to the first supporting position P11 in the vertical direction from the position of the center of gravity in the vertical direction becomes smaller than a predetermined distance. The second supporting position support module 212 determines the second supporting position P21 so that a distance in a downward direction with respect to the second supporting position P21 in the vertical direction from the position of the center of gravity in the vertical direction becomes smaller than a predetermined distance. The method of determining the first supporting position P11 and the second supporting position P21 is different from that in the embodiment, but the method of controlling the first robot 30 and the second robot 40 after the first supporting position P11 and the second supporting position P21 are determined may be similar to that in the embodiment.

The robot control system 1 of Modification Example 9 controls at least one of the first robot 30 or the second robot 40 so that the at least one of the first robot 30 or the second robot 40 supports the indefinite-shape object OB at the second vertical position lower than the center of gravity in the vertical direction. At least one of the first robot 30 or the second robot 40 supports a position lower than the center of gravity of the indefinite-shape object OB in the vertical direction, and hence the robot control system 1 can support the indefinite-shape object OB under a more stable state.

### [6-10. Modification Example 10]

For example, the first robot 30 may support the first supporting position P11 corresponding to the size of the indefinite-shape object OB. The second robot 40 may support the second supporting position P21 corresponding to the size of the indefinite-shape object OB.

The robot control system 1 includes a size identification module for identifying the size of the indefinite-shape object OB. For example, the first robot controller 10 includes the first size identification module 112, and the second robot controller 20 includes the second size identification module 213. The first size identification module 112 and the second size identification module 213 are examples of the size identification module. The first robot controller 10 is not required to include the first size identification module 112, and only the second robot controller 20 may include the second size identification module 213. Conversely, the second robot controller 20 is not required to include the second size identification module 213, and only the first robot controller 10 may include the first size identification module 112.

For example, when the user designates the size of the indefinite-shape object OB, it is assumed that a size parameter indicating the size designated by the user is stored in advance in the first data storage unit 100 and the second data storage unit 200. The first size identification module 112 identifies the size of the indefinite-shape object OB based on the size parameter. The second size identification module 213 identifies the size of the indefinite-shape object OB based on the size parameter. The method of identifying the size of the indefinite-shape object OB is not limited to designation by the user. For example, the first size identification module 112 may identify the size of the indefinite-shape object OB by analyzing the photographed image generated by the camera 32. The second size identification module 213 may identify the size of the indefinite-shape object OB by analyzing the photographed image generated by the camera 32. The second size identification module 213 may acquire an identification result obtained by the first size identification module 112 instead of analyzing the image by itself.

The robot control system 1 includes a size position support module for controlling at least one of the first robot 30 or the second robot 40 so that the at least one of the first robot 30 or the second robot 40 supports the indefinite-shape object OB at the size position corresponding to the size. For example, the first robot controller 10 includes the first size position support module 113. The second robot controller 20 includes the second size position support module 214. The first size position support module 113 and the second size position support module 214 are examples of the size position support module. The first robot controller 10 is not required to include the first size position support module 113, and only the second robot controller 20 may include the second size position support module 214. Conversely, the second robot controller 20 is not required to include the second size position support module 214, and only the first robot controller 10 may include the first size position support module 113.

For example, the first size position support module 113 determines the first supporting position P11 so that the first supporting position P11 becomes higher as the size of the indefinite-shape object OB becomes larger. The second size position support module 214 determines the second supporting position P21 so that the second supporting position P21 becomes higher as the size of the indefinite-shape object OB becomes larger. The method of determining the first supporting position P11 and the second supporting position P21 is different from that in the embodiment, but the method of controlling the first robot 30 and the second robot 40 after the first supporting position P11 and the second supporting position P21 are determined may be similar to that in the embodiment.

The robot control system 1 of Modification Example 10 identifies the size of the indefinite-shape object OB. The robot control system 1 controls at least one of the first robot 30 or the second robot 40 so that the at least one of the first robot 30 or the second robot 40 supports the indefinite-shape object OB at the size position corresponding to the size. The robot control system 1 can support the indefinite-shape object OB at a size position corresponding to the property of the indefinite-shape object OB.

### [6-11. Modification Example 11]

For example, the first robot 30 and the second robot 40 may take postures corresponding to the center of gravity of the indefinite-shape object OB during conveyance of the indefinite-shape object OB. The robot control system 1 of Modification Example 11 includes a center-of-gravity identification module similar to that in Modification Example 7. Also in Modification Example 11, as an example, description is given of a case in which, similarly to Modification Example 7, the first robot controller 10 includes the first center-of-gravity identification module 110 and the second robot controller 20 includes the second center-of-gravity identification module 211. In Modification Example 7, description has been given of a case in which the center of gravity of the indefinite-shape object OB is identified before conveyance, but, in Modification Example 11, the center of gravity of the indefinite-shape object OB is identified during conveyance. The method of identifying the center of gravity itself is the same as that described in Modification Example 7.

The robot control system 1 of Modification Example 11 includes a posture control module for controlling a posture of at least one of the first robot 30 or the second robot 40 during conveyance of the indefinite-shape object OB, based on the center of gravity of the indefinite-shape object OB during conveyance. For example, the first robot controller 10 includes the first posture control module 114, and the second robot controller 20 includes the second posture control module 215. The first posture control module 114 and the second posture control module 215 are examples of the posture control module. The first robot controller 10 is not required to include the first posture control module 114, and only the second robot controller 20 may include the second posture control module 215. Conversely, the second robot controller 20 is not required to include the second posture control module 215, and only the first robot controller 10 may include the first posture control module 114.

For example, it is assumed that data indicating the relationship between the center of gravity of the indefinite-shape object OB and the posture of the first robot 30 is stored in advance in the first data storage unit 100. This data may be the first robot control program or data different from the first robot control program (for example, data having a numerical expression format or a table format). The first posture control module 114 controls the first robot 30 so that a posture associated with the center of gravity of the indefinite-shape object OB is obtained, based on this data. For example, the first posture control module 114 controls the first robot 30 so that the first attracting device 31 is directed more upward as the center of gravity of the indefinite-shape object OB becomes lower.

For example, it is assumed that data indicating the relationship between the center of gravity of the indefinite-shape object OB and the posture of the second robot 40 is stored in advance in the second data storage unit 200. This data may be the second robot control program or data different from the second robot control program (for example, data having a numerical expression format or a table format). The second posture control module 215 controls the second robot 40 so that a posture associated with the center of gravity of the indefinite-shape object OB is obtained, based on this data. For example, the second posture control module 215 controls the second robot 40 so that the second attracting device 41 is directed more upward as the center of gravity of the indefinite-shape object OB becomes lower.

The robot control system 1 of Modification Example 11 identifies the center of gravity of the indefinite-shape object OB being conveyed. The robot control system 1 controls the posture of at least one of the first robot 30 or the second robot 40 during conveyance of the indefinite-shape object OB based on the center of gravity of the indefinite-shape object OB during conveyance. The robot control system 1 can execute control corresponding to the center of gravity during conveyance.

### [6-12. Modification Example 12]

For example, the robot control system 1 may include an orientation control module for controlling at least one of the first robot 30 or the second robot 40 so that the attracting device attracts the indefinite-shape object OB in an orientation (posture) corresponding to the indefinite-shape object OB. In Modification Example 12, the first robot controller 10 includes the first orientation control module 115, and the second robot controller 20 includes the second orientation control module 216. The first orientation control module 115 and the second orientation control module 216 are examples of the orientation control module. The first robot controller 10 is not required to include the first orientation control module 115, and only the second robot controller 20 may include the second orientation control module 216. Conversely, the second robot controller 20 is not required to include the second orientation control module 216, and only the first robot controller 10 may include the first orientation control module 115.

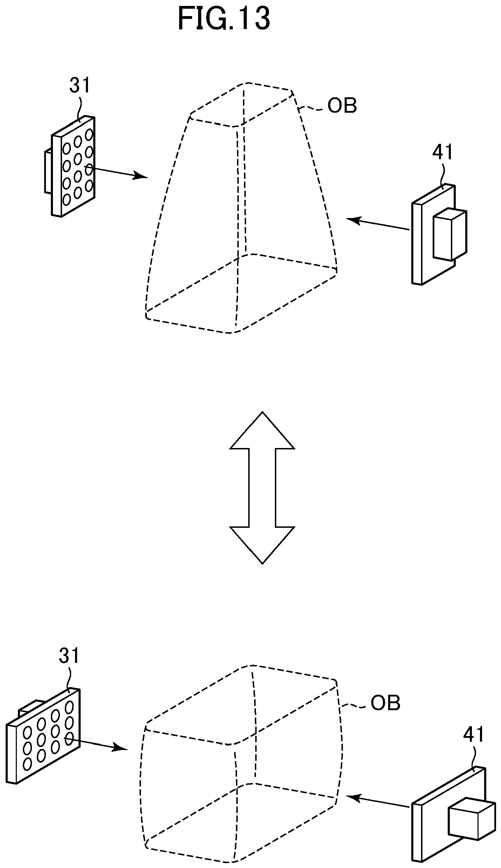

FIG. 13 is a view for illustrating an example of a state in which each of the first attracting device 31 and the second attracting device 41 attracts the indefinite-shape object OB in an orientation corresponding to the indefinite-shape object OB. For example, when the indefinite-shape object OB has a vertically long shape, the first orientation control module 115 controls the posture of the first attracting device 31 so that the first attracting device 31 attracts the indefinite-shape object OB under a vertically long state. When the indefinite-shape object OB has a horizontally long shape, the first orientation control module 115 controls the posture of the first attracting device 31 so that the first attracting device 31 attracts the indefinite-shape object OB under a horizontally long state.

For example, when the indefinite-shape object OB has a vertically long shape, the second orientation control module 216 controls the posture of the second attracting device 41 so that the second attracting device 41 attracts the indefinite-shape object OB under a vertically long state. When the indefinite-shape object OB has a horizontally long shape, the second orientation control module 216 controls the posture of the second attracting device 41 so that the second attracting device 41 attracts the indefinite-shape object OB under a horizontally long state.

The robot control system 1 of Modification Example 12 controls at least one of the first robot 30 or the second robot 40 so that the attracting device attracts the indefinite-shape object OB in an orientation corresponding to the indefinite-shape object OB. The robot control system 1 can attract the indefinite-shape object OB in an orientation corresponding to the indefinite-shape object OB, and hence the reliability of supporting the indefinite-shape object OB is enhanced.

### [6-13. Modification Example 13]

For example, the robot control system 1 may include a post-process position control module for controlling at least one of the first robot 30 or the second robot 40 so that the at least one of the first robot 30 or the second robot 40 supports the indefinite-shape object OB at a post-process position corresponding to a post-process performed after the indefinite-shape object OB is conveyed. The post-process is a process performed after the conveyance of the indefinite-shape object OB. In the example of the embodiment, a process of dropping the contents of the indefinite-shape object OB into the storage container C corresponds to the post-process. The post-process position is the supporting position in Modification Example 13. A post-process parameter indicating the post-process designated by the user may be stored in the first data storage unit 100 and the second data storage unit 200, or the post-process may be identified based on codes in the first robot control program and the second robot control program.

In Modification Example 5, the first robot controller 10 includes the first post-process position control module 116, and the second robot controller 20 includes the second post-process position control module 217. The first post-process position control module 116 and the second post-process position control module 217 are examples of the post-process position control module. The first robot controller 10 is not required to include the first post-process position control module 116, and only the second robot controller 20 may include the second post-process position control module 217. Conversely, the second robot controller 20 is not required to include the second post-process position control module 217, and only the first robot controller 10 may include the first post-process position control module 116.

For example, it is assumed that data indicating the relationship between the post-process and the first post-process position (first supporting position P11 in Modification Example 13) is stored in advance in the first data storage unit 100. This data may be the first robot control program or data different from the first robot control program (for example, data having a numerical expression format or a table format). The first post-process position control module 116 determines the first supporting position P11 so that the first supporting position P11 associated with the post-process is obtained, based on this data. For example, when the process of dropping the contents of the indefinite-shape object OB into the storage container C corresponds to the post-process, the first post-process position control module 116 determines the first supporting position P11 so that the first supporting position P11 becomes lower than that in a case in which the post-process is another process (for example, process of arranging the indefinite-shape object OB onto a conveyor belt).

For example, it is assumed that data indicating the relationship between the post-process and the second post-process position (second supporting position P21 in Modification Example 13) is stored in advance in the second data storage unit 200. This data may be the second robot control program or data different from the second robot control program (for example, data having a numerical expression format or a table format). The second post-process position control module 217 determines the second supporting position P21 so that the second post-process position associated with the post-process becomes the second supporting position P21, based on this data. The method of determining the first supporting position P11 and the second supporting position P21 is different from that in the embodiment, but the method of controlling the first robot 30 and the second robot 40 after the first supporting position P11 and the second supporting position P21 are determined may be similar to that in the embodiment.

The robot control system 1 of Modification Example 13 controls at least one of the first robot 30 or the second robot 40 so that the at least one of the first robot 30 or the second robot 40 supports the indefinite-shape object OB at the first post-process position corresponding to the post-process performed after the indefinite-shape object OB is conveyed. The robot control system 1 can sandwich the indefinite-shape object OB at a sandwiching position corresponding to the post-process.

### [6-14. Other Modification Examples]

For example, the above-mentioned modification examples may be combined.

For example, each of the functions described above may be implemented by any device of the robot control system 1. The functions described as being included in the first robot controller 10 may be implemented by the second robot controller 20 or another device. The functions described as being included in the second robot controller 20 may be implemented by the first robot controller 10 or another device. The functions described as being implemented by one device may be shared among a plurality of devices.

For example, the robot control system can also have the following configurations.
(1) A robot control system, including:
   a first robot;
   a second robot;
   a first robot control module configured to control the first robot so that the first robot supports a first part of an indefinite-shape object placed at a predetermined location; and
   a second robot control module configured to control the second robot so that the second robot supports a second part of the indefinite-shape object to convey the indefinite-shape object in cooperation with the first robot, the second part being different from the first part.
(2) The robot control system according to Item (1), wherein the second robot control module includes a second sandwiching control module configured to control the second robot so that the first robot and the second robot sandwich the indefinite-shape object to support the indefinite-shape object.
(3) The robot control system according to Item (1) or (2), wherein at least one of the first robot or the second robot includes an attracting device configured to attract the indefinite-shape object.
(4) The robot control system according to Item (3), wherein the attracting device is a suction device configured to suck the indefinite-shape object.
(5) The robot control system according to Item (3) or (4),
   wherein the at least one of the first robot or the second robot includes an attraction pressure detector configured to detect an attraction pressure of the attracting device, and
   wherein the robot control system further includes:
      an attraction pressure acquisition module configured to acquire the attraction pressure; and
      an advancing control module configured to control the at least one of the first robot or the second robot so that the attracting device moves toward the indefinite-shape object until the attraction pressure becomes equal to or larger than a threshold value.
(6) The robot control system according to Item (5),
   wherein the first robot includes:
      a first attracting device; and
      a first attraction pressure detector configured to detect a first attraction pressure which is an attraction pressure of the first attracting device,
   wherein the second robot includes:
      a second attracting device; and
      a second attraction pressure detector configured to detect a second attraction pressure which is an attraction pressure of the second attracting device,
   wherein the first robot control module includes:
      a first attraction pressure acquisition module configured to acquire the first attraction pressure;
      a second attraction pressure acquisition module configured to acquire the second attraction pressure; and
      a first speed control module configured to control the first robot so that, when the first attraction pressure becomes equal to or larger than a first threshold value, the first attracting device stops moving, and, when the second attraction pressure becomes equal to or larger than a second threshold value before the first attraction pressure becomes equal to or larger than the first threshold value, a movement speed of the first attracting device is decreased, and
   wherein the second robot control module includes:
      a first attraction pressure acquisition module configured to acquire the first attraction pressure;
      a second attraction pressure acquisition module configured to acquire the second attraction pressure; and
      a second speed control module configured to control the second robot so that, when the second attraction pressure becomes equal to or larger than the second threshold value, the second attracting device stops moving, and, when the first attraction pressure becomes equal to or larger than the first threshold value before the second attraction pressure becomes equal to or larger than the second threshold value, a movement speed of the second attracting device is decreased.
(7) The robot control system according to any one of Items (1) to (6), wherein the second robot control module includes a position control module configured to determine a position at which the second robot supports the indefinite-shape object, based on a position at which the first robot supports the indefinite-shape object.
(8) The robot control system according to any one of Items (3) to (6), further including a start control module configured to start attraction by the attracting device after the attracting device comes into contact with the indefinite-shape object.
(9) The robot control system according to any one of Items (3) to (6) or (8), further including an attraction force control module configured to control the attracting device so that an attraction force corresponding to the indefinite-shape object is obtained.
(10) The robot control system according to Item (9), further including a type identification module configured to identify a type of the indefinite-shape object,
   wherein the attraction force control module is configured to control the attracting device so that an attraction force corresponding to the type is obtained.
(11) The robot control system according to any one of Items (1) to (10), further including:
   a center-of-gravity identification module configured to identity a center of gravity of the indefinite-shape object placed at the predetermined location; and
   a supporting position support module configured to control at least one of the first robot or the second robot so that the at least one of the first robot or the second robot supports the indefinite-shape object at a supporting position corresponding to the center of gravity.
(12) The robot control system according to Item (11), wherein the supporting position support module is configured to control the at least one of the first robot or the second robot so that the at least one of the first robot or the second robot supports the indefinite-shape object at a first horizontal position corresponding to the center of gravity in a horizontal direction, and supports the indefinite-shape object at a predetermined first vertical position in a vertical direction.
(13) The robot control system according to Item (12), wherein the supporting position support module is configured to control the at least one of the first robot or the second robot so that the at least one of the first robot or the second robot supports the indefinite-shape object at a second vertical position lower than the center of gravity in the vertical direction.
(14) The robot control system according to any one of Items (11) to (13), wherein the center-of-gravity identification module is configured to identify the center of gravity based on an image indicating the indefinite-shape object captured by a camera.
(15) The robot control system according to any one of Items (1) to (14), further including:
   a size identification module configured to identify a size of the indefinite-shape object; and
   a size position support module configured to control at least one of the first robot or the second robot so that the at least one of the first robot or the second robot supports the indefinite-shape object at a size position corresponding to the size.
(16) The robot control system according to any one of Items (1) to (15), further including:
   a center-of-gravity identification module configured to identify a center of gravity of the indefinite-shape object being conveyed; and
   a posture control module configured to control a posture of at least one of the first robot or the second robot during conveyance of the indefinite-shape object, based on the center of gravity.
(17) The robot control system according to any one of Items (3) to (6) or (8) or (9), further including an orientation control module configured to control at least one of the first robot or the second robot so that the attracting device attracts the indefinite-shape object in an orientation corresponding to the indefinite-shape object.
(18) The robot control system according to any one of Items (1) to (17), further including a post-process position control module configured to control at least one of the first robot or the second robot so that the at least one of the first robot or the second robot supports the indefinite-shape object at a post-process position corresponding to a post-process performed after the indefinite-shape object is conveyed.

While there have been described what are at present considered to be certain embodiments of the invention, it will be understood that various modifications may be made thereto, and it is intended that the appended claims cover all such modifications as fall within the true spirit and scope of the invention.

## Claims

1. A robot control system (1), comprising:
a first robot (30);
a second robot (40);
a first robot control module (101) configured to control the first robot (30) so that the first robot (30) supports a first part of an indefinite-shape object placed at a predetermined location; and
a second robot control module (201) configured to control the second robot (40) so that the second robot (40) supports a second part of the indefinite-shape object to convey the indefinite-shape object in cooperation with the first robot, the second part being different from the first part.

2. The robot control system (1) according to claim 1, wherein the second robot control module (201) includes a second sandwiching control module configured to control the second robot (40) so that the first robot (30) and the second robot (40) sandwiches the indefinite-shape object to support the indefinite-shape object.

3. The robot control system (1) according to claim 1 or 2, wherein at least one of the first robot (30) or the second robot (40) includes an attracting device configured to attract the indefinite-shape object.

4. The robot control system (1) according to claim 3, wherein the attracting device is a suction device configured to suck the indefinite-shape object.

5. The robot control system (1) according to claim 3 or 4,
wherein the at least one of the first robot (30) or the second robot (40) includes an attraction pressure detector configured to detect an attraction pressure of the attracting device, and
wherein the robot control system (1) further comprises:
an attraction pressure acquisition module (103, 105, 203, 205) configured to acquire the attraction pressure; and
an advancing control module (104, 204) configured to control the at least one of the first robot (30) or the second robot (40) so that the attracting device moves toward the indefinite-shape object until the attraction pressure becomes equal to or larger than a threshold value.

6. The robot control system (1) according to claim 5,
wherein the first robot (30) includes:
a first attracting device; and
a first attraction pressure detector configured to detect a first attraction pressure which is an attraction pressure of the first attracting device,
wherein the second robot (40) includes:
a second attracting device; and
a second attraction pressure detector configured to detect a second attraction pressure which is an attraction pressure of the second attracting device,
wherein the first robot control module (101) includes:
a first attraction pressure acquisition module (103) configured to acquire the first attraction pressure;
a second attraction pressure acquisition module (105) configured to acquire the second attraction pressure; and
a first speed control module (106) configured to control the first robot (30) so that, when the first attraction pressure becomes equal to or larger than a first threshold value, the first attracting device stops moving, and, when the second attraction pressure becomes equal to or larger than a second threshold value before the first attraction pressure becomes equal to or larger than the first threshold value, a movement speed of the first attracting device is decreased, and
wherein the second robot control module (201) includes:
a first attraction pressure acquisition module (205) configured to acquire the first attraction pressure;
a second attraction pressure acquisition module (203) configured to acquire the second attraction pressure; and
a second speed control module (206) configured to control the second robot (40) so that, when the second attraction pressure becomes equal to or larger than the second threshold value, the second attracting device stops moving, and, when the first attraction pressure becomes equal to or larger than the first threshold value before the second attraction pressure becomes equal to or larger than the second threshold value, a movement speed of the second attracting device is decreased.

7. The robot control system (1) according to any one of claims 1 to 6, wherein the second robot control module (201) includes a position control module (207) configured to determine a position at which the second robot (40) supports the indefinite-shape object, based on a position at which the first robot (30) supports the indefinite-shape object.

8. The robot control system (1) according to any one of claims 3 to 6, further comprising a start control module (107, 208) configured to start attraction by the attracting device after the attracting device comes into contact with the indefinite-shape object.

9. The robot control system (1) according to any one of claims 3 to 6, further comprising an attraction force control module (108, 209) configured to control the attracting device so that an attraction force corresponding to the indefinite-shape object is obtained.

10. The robot control system (1) according to claim 9, further comprising a type identification module (109, 210) configured to identify a type of the indefinite-shape object,
wherein the attraction force control module (108, 209) is configured to control the attracting device so that an attraction force corresponding to the type is obtained.

11. The robot control system (1) according to any one of claims 1 to 10, further comprising:
a center-of-gravity identification module (110, 211) configured to identity a center of gravity of the indefinite-shape object placed at the predetermined location; and
a supporting position support module (111, 212) configured to control at least one of the first robot (30) or the second robot (40) so that the at least one of the first robot (30) or the second robot (40) supports the indefinite-shape object at a supporting position corresponding to the center of gravity.

12. The robot control system (1) according to claim 11, wherein the supporting position support module (111, 212) is configured to control the at least one of the first robot (30) or the second robot (40) so that the at least one of the first robot (30) or the second robot (40) supports the indefinite-shape object at a first horizontal position corresponding to the center of gravity in a horizontal direction, and supports the indefinite-shape object at a predetermined first vertical position in a vertical direction.

13. The robot control system (1) according to claim 12, wherein the supporting position support module (111, 212) is configured to control the at least one of the first robot (30) or the second robot (40) so that the at least one of the first robot (30) or the second robot (40) supports the indefinite-shape object at a second vertical position lower than the center of gravity in the vertical direction.

14. A robot control method, comprising:
controlling a first robot (30) so that the first robot (30) supports a first part of an indefinite-shape object placed at a predetermined location; and
controlling a second robot (40) so that the second robot (40) supports a second part of the indefinite-shape object to convey the indefinite-shape object in cooperation with the first robot (30) , the second part being different from the first part.

15. A program for causing a robot controller (20) configured to control a second robot (40) which cooperates with a first robot (30) so that the second robot (40) supports a second part of an indefinite-shape object placed at a predetermined location, the second part being different from a first part supported by the first robot (30), to convey the indefinite-shape object in cooperation with the first robot (30).
